# EUROPEAN PATENT SPECIFICATION

(11) **EP 4 032 336 B1**
(45) Date of publication and mention of the grant of the patent: **08.01.2025**
(21) Application number: 20761561.8
(22) Date of filing: 24.08.2020
(51) Int. Cl.: H04W 24/10, H04W 72/044

(54) **MPE ASSISTANCE IN TELECOMMUNICATION SYSTEMS**
MPE-UNTERSTÜTZUNG IN TELEKOMMUNIKATIONSSYSTEMEN
ASSISTANCE VIS-À-VIS D'UN MPE DANS DES SYSTÈMES DE TÉLÉCOMMUNICATIONS

(30) Priority: 20.09.2019 GB 201913562
(43) Date of publication of application: 27.07.2022
(73) Proprietor: Nokia Technologies Oy, 02610 Espoo (FI)
(72) Inventor: KIILERICH PRATAS, Nuno Manuel, 9260 Gistrup (DK); SVENDSEN, Simon, 9000 Aalborg (DK); CAPORAL DEL BARRIO, Samantha, 9000 Aalborg (DK); NIELSEN, Sari Kaarina, 02750 Espoo (FI); VEJLGAARD, Benny, 9260 Gistrup (DK)
(74) Representative: Nokia EPO representatives
(86) International application number: PCT/EP2020/073624
(87) International publication number: WO 2021/052716

(56) References cited:
- US-A1- 2012 178 494
- US-A1- 2014 153 661
- US-A1- 2018 167 897
- US-A1- 2019 261 289
- NOKIA ET AL: "Mitigating Radio Link Failures due to MPE on FR2", vol. RAN WG4, no. Ljubljana, Slovenia; 20190826 - 20190830, 16 August 2019 (2019-08-16), XP051771761, Retrieved from the Internet <URL:http://www.3gpp.org/ftp/tsg_ran/WG4_Radio/TSGR4_92/Docs/R4-1908820.zip> [retrieved on 20190816]
- NOKIA ET AL: "Mitigating Radio Link Failures due to MPE on FR2", vol. RAN WG4, no. Ljubljana, Slovenia; 20190826 - 20190830, 2 September 2019 (2019-09-02), XP051773092, Retrieved from the Internet <URL:http://www.3gpp.org/ftp/tsg_ran/WG4_Radio/TSGR4_92/Docs/R4-1910278.zip> [retrieved on 20190902]

## Description

### Field

The present specification relates to mobile communication systems, in particular to the use of mobile communication systems in accordance with exposure guidelines.

### Background

Exposure guidelines for communication systems are known. Such exposure guidelines may be expressed relative to specific absorption rate (SAR) or maximum permissible exposure (MPE). Although developments have been made, there remains scope for further developments in this field.

US 2012/0178494 describes methods, apparatus and systems for a wireless transmit/receive unit (WTRU) to manage its transmission power. A power headroom report (PHR) may be triggered based on changes to backoff or the impacts of backoff. Additional backoff may be used to calculate a maximum output power of the WTRU and may be indicated by a domination indicator to network resources. Prior-art document "Mitigating Radio Link Failures due to MPE on FR2", 3GPP R4-1910278, discusses mechanisms helping the network cope with UE Maximum Permissible Exposure (MPE) limitations.

### Summary

In a first aspect, this specification describes an apparatus (e.g. an user device, or an apparatus implemented at a user device) comprising: means for detecting an occurrence of a maximum permissible exposure event (e.g. when a user device is at a distance less than a minimum safety distance from a user); means for determining a severity of the detected maximum permissible exposure event; means for setting a periodic scheduling override condition to be valid in the event that the detected maximum permissible exposure event is determined to have a high severity; means for reporting (e.g. to a network element) maximum permissible exposure assistance information in response to the detection of the occurrence of the maximum permissible exposure event, wherein the means for reporting the maximum permissible exposure assistance information is configured to: generate a scheduled report in the event that the periodic scheduling override condition is invalid, wherein the scheduled report is sent when a first time period expires; and generate an unscheduled report in the event that the periodic scheduling override condition is valid, wherein the unscheduled report is sent without waiting for the first time period to expire. A first timer may be provided for monitoring said first time period (e.g. the first time period may be the period of the first timer).

The detected maximum permissible exposure event may be determined to have a high severity in the event that a duty cycle reduction required to address said exposure event is above a threshold or in the event that power backoff requirements are above a threshold.

Some example embodiments further comprise means for monitoring an ongoing maximum permissible exposure event (e.g. using a second timer). Some example embodiments further comprise means for reporting that the maximum permissible exposure event has ended in the event that the maximum permissible exposure event ends before a second time period expires. The second time period may be the same, or may be different, to the first time period referred to above.

Some example embodiments further comprise a first timer for monitoring said first time period. Thus, for example, the first time period may be the period of the first timer. Some example embodiments further comprise a second timer for monitoring the second time period referred to above. The second time period may be same as the first time period, but this is not essential to all example embodiments. For example, the second time period may be shorter than the first. The first and second timers may be implemented using the same timer apparatus, or using separate timer apparatus. Some example embodiments further comprise means for indicating (e.g. by communication with the relevant network, base station, node B etc.) that the apparatus (e.g. the relevant user device) is capable of providing maximum permissible exposure assistance information.

Some example embodiments further comprise means for triggering a power backoff in response to the maximum permissible exposure event. Alternatively, or in addition, some example embodiments further comprise means for triggering a duty cycle adjustment (or a duty cycle limit) in response to the maximum permissible exposure event. The power backoff and/or the duty cycle limit may be triggered in order to meet MPE regulation requirements.

Some example embodiments further comprise means for reconfiguring user device protocols to enable maximum permissible exposure assistance information to be communicated between a user device and a network element.

The said maximum permissible exposure assistance information may be provided as part of a modified L3-based UE assistance signalling procedure. For example, said signalling procedure may include: establishing a connection; exchanging capabilities; and device reconfiguration.

In a second aspect, this specification describes an apparatus (e.g. a network node, such as a base station and gNB or a device or system in communication with such as node) comprising: means for detecting (e.g. at a network element or similar device or system) a maximum permissible exposure event report (e.g. received from a user device or from a device or system in communication with one or more user devices); means for determining whether the detected maximum permissible exposure report is a scheduled report or an unscheduled report (e.g. based on whether the report is received with an expected periodicity); means for determining whether one or more time periods (e.g. as implemented by one or more timers) of the maximum permissible exposure event protocol should be updated in the event the detected maximum permissible exposure event report is determined to be an unscheduled report, in order to reduce the instances of unscheduled reports; and means for adjusting uplink resources (e.g. triggering duty cycle adjustments and/or power back-off in response to the MPE event) to meet maximum permissible exposure power backoff requirements.

Some example embodiments further comprise means for storing maximum permissible exposure event statistics on receipt of a maximum permissible exposure event report.

Some example embodiments further comprise means for receiving an indication that a remote user device is capable of providing maximum permissible exposure related assistance information.

Some example embodiments further comprise means for defining a first timer start time for a user device, wherein said scheduled report is sent by said user device to said apparatus in the event of the expiry of said first timer. The means for defining a first timer start time may define first timer start times for each of a plurality of user devices (e.g. different user devices of the plurality may have different first timer start times).

Some example embodiments further comprise means for reconfiguring user device protocols to enable maximum permissible exposure assistance information to be communicated between a user device and a network element.

The said maximum permissible exposure assistance information may be provided as part of a modified L3-based UE assistance signalling procedure. For example, said signalling procedure may include: establishing a connection; exchanging capabilities; and device reconfiguration.

In a third aspect, this specification describes a method comprising: detecting an occurrence of a maximum permissible exposure event; determining a severity of the detected maximum permissible exposure event and setting a periodic scheduling override condition to be valid in the event that the detected maximum permissible exposure event is determined to have a high severity; and reporting maximum permissible exposure assistance information in response to the detection of the occurrence of the maximum permissible exposure event, wherein reporting the maximum permissible exposure assistance information comprises: generating a scheduled report in the event that the periodic scheduling override condition is invalid, wherein the scheduled report is sent when a first time period expires; and generating an unscheduled report in the event that the periodic scheduling override condition is valid, wherein the unscheduled report is sent without waiting for the first time period to expire.

The method may further comprise monitoring an ongoing maximum permissible exposure event and reporting that the maximum permissible exposure event has ended in the event that the maximum permissible exposure event ends before a second time period expires.

In a fourth aspect, this specification describes a method comprising: detecting a maximum permissible exposure event report; determining whether the detected maximum permissible exposure report is a scheduled report or an unscheduled report; determining whether one or more time periods of the maximum permissible exposure event protocol should be updated in the event that the detected maximum permissible exposure event report is determined to be an unscheduled report, in order to reduce the instances of unscheduled reports; and adjusting uplink resources to meet maximum permissible exposure power backoff requirements.

The method may further comprise storing maximum permissible exposure event statistics on receipt of a maximum permissible exposure event report.

The method may further comprise defining a first timer start time for a user device, wherein said scheduled report is sent by said user device in the event of the expiry of said first timer. Example embodiments may further comprise defining first timer start times for each of a plurality of user devices.

In a fifth aspect, not claimed, this specification describes an apparatus configured to perform any method as described with reference to the third or fourth aspects.

In a sixth aspect, not claimed, this specification describes computer-readable instructions which, when executed by computing apparatus, cause the computing apparatus to perform any method as described with reference to the third or fourth aspects.

In a seventh aspect, not claimed, this specification describes a computer readable medium comprising program instructions stored thereon for performing at least the following: detecting an occurrence of a maximum permissible exposure event; and reporting maximum permissible exposure assistance information in response to the detection of the occurrence of the maximum permissible exposure event, wherein reporting the maximum permissible exposure assistance information comprises: generating a scheduled report in the event that a periodic scheduling override condition is invalid, wherein the scheduled report is sent when a first time period expires; and generating an unscheduled report in the event that the periodic scheduling override condition is valid, wherein the unscheduled report is sent without waiting for the first time period to expire.

In an eighth aspect, not claimed, this specification describes a computer readable medium comprising program instructions stored thereon for performing at least the following: detecting a maximum permissible exposure event report; determining whether the detected maximum permissible exposure report is a scheduled report or an unscheduled report; determining whether one or more time periods of the maximum permissible exposure event protocol should be updated in the event that the detected maximum permissible exposure event report is determined to be an unscheduled report, in order to reduce the instances of unscheduled reports; and adjusting uplink resources to meet maximum permissible exposure power backoff requirements.

In a ninth aspect, this specification describes a computer program comprising instructions which, when the program is executed by a computer, cause the computer to carry out at least the following: detecting an occurrence of a maximum permissible exposure event; and determining a severity of the detected maximum permissible exposure event; setting a periodic scheduling override condition to be valid in the event that the detected maximum permissible exposure event is determined to have a high severity; and reporting maximum permissible exposure assistance information in response to the detection of the occurrence of the maximum permissible exposure event, wherein reporting the maximum permissible exposure assistance information comprises: generating a scheduled report in the event that a periodic scheduling override condition is invalid, wherein the scheduled report is sent when a first time period expires; and generating an unscheduled report in the event that the periodic scheduling override condition is valid, wherein the unscheduled report is sent without waiting for the first time period to expire.

In a tenth aspect, this specification describes a computer program comprising instructions which, when the program is executed by a computer, cause the computer to carry out at least the following: detecting a maximum permissible exposure event report; determining whether the detected maximum permissible exposure report is a scheduled report or an unscheduled report; determining whether one or more time periods of the maximum permissible exposure event protocol should be updated in the event that the detected maximum permissible exposure event report is determined to be an unscheduled report, in order to reduce the instances of unscheduled reports; and adjusting uplink resources to meet maximum permissible exposure power backoff requirements.

In an eleventh aspect, not claimed, this specification describes an apparatus comprising: at least one processor; and at least one memory including computer program code which, when executed by the at least one processor, causes the apparatus to: detect an occurrence of a maximum permissible exposure event; and report maximum permissible exposure assistance information in response to the detection of the occurrence of the maximum permissible exposure event, wherein reporting the maximum permissible exposure assistance information comprises: generating a scheduled report in the event that a periodic scheduling override condition is invalid, wherein the scheduled report is sent when a first time period expires; and generating an unscheduled report in the event that the periodic scheduling override condition is valid, wherein the unscheduled report is sent without waiting for the first time period to expire.

In a twelfth aspect, not claimed, this specification describes an apparatus comprising: at least one processor; and at least one memory including computer program code which, when executed by the at least one processor, causes the apparatus to: detect a maximum permissible exposure event report; determine whether the detected maximum permissible exposure report is a scheduled report or an unscheduled report; determine whether one or more time periods of the maximum permissible exposure event protocol should be updated in the event that the detected maximum permissible exposure event report is determined to be an unscheduled report, in order to reduce the instances of unscheduled reports; and adjust uplink resources to meet maximum permissible exposure power backoff requirements.

In a thirteenth aspect, not claimed, this specification describes an apparatus comprising: a maximum permissible exposure event monitor for detecting an occurrence of a maximum permissible exposure event; and an output for reporting maximum permissible exposure assistance information (e.g. to a network node) in response to the detection of the occurrence of the maximum permissible exposure event, wherein reporting the maximum permissible exposure assistance information comprises: generating a scheduled report in the event that a periodic scheduling override condition is invalid, wherein the scheduled report is sent when a first time period expires; and generating an unscheduled report in the event that the periodic scheduling override condition is valid, wherein the unscheduled report is sent without waiting for the first time period to expire.

In a fourteenth aspect, not claimed, this specification describes an apparatus comprising: a control module for detecting a maximum permissible exposure event report and determining whether the detected maximum permissible exposure report is a scheduled report or an unscheduled report; a timer module for determining whether one or more time periods of the maximum permissible exposure event protocol should be updated in the event that the detected maximum permissible exposure event report is determined to be an unscheduled report, in order to reduce the instances of unscheduled reports; and resources module for adjusting uplink resources to meet maximum permissible exposure power backoff requirements.

### Brief description of the drawings

Example embodiments will now be described, by way of non-limiting examples, with reference to the following schematic drawings, in which:
FIG. 1 is a block diagram of a system in accordance with an example embodiment;
FIG. 2 is a graph showing example exposure rates;
FIGS. 3 and 4 are block diagrams of systems in accordance with example embodiments;
FIG. 5 is a plot showing an example power back-off feature;
FIG. 6 is a message sequence in accordance with an example embodiment;
FIG. 7 is a flow chart showing an algorithm in accordance with an example embodiment;
FIG. 8 is a message sequence in accordance with an example embodiment;
FIG. 9 is a message sequence in accordance with an example embodiment;
FIG. 10 is a flow chart showing an algorithm in accordance with an example embodiment;
FIG. 11 is a flow chart showing an algorithm in accordance with an example embodiment;
FIG. 12 is a block diagram of components of a system in accordance with an example embodiment; and
FIGS. 13A and 13B show tangible media, respectively a removable non-volatile memory unit and a Compact Disc (CD) storing computer-readable code which when run by a computer perform operations according to example embodiments.

### Detailed description

The scope of protection sought for various example embodiments of the invention is set out by the independent claims. The example embodiments and features, if any, described in the specification that do not fall under the scope of the independent claims are to be interpreted as examples useful for understanding various embodiments of the invention.

In the description and drawings, like reference numerals refer to like elements throughout.

The millimeter-wave (mmW) spectrum offers the possibility of using large portions of contiguous bandwidth to enable mobile communication systems to provide highthroughput applications. The 5th Generation (5G) New Radio (NR) frequency spectrum extends well-above the previous 4th Generation (4G) spectrum, which was ranging from 400 MHz to 6 GHz - otherwise known as Frequency Range 1 (FR1). In mmWave 5G NR, Frequency Range 2 (FR2) comprises the frequencies between 24 GHz and 52 GHz; and extending the NR operation into the 52-114 GHz range is currently being discussed.

Operating at such high frequencies with high gain antennas has raised concerns for the health of users. There is a standard on millimeter-wave regime that specifies and regulates the maximum power for the user equipment (UE). Since frequencies below 100 GHz are non-ionizing, the concern for health is limited to thermal heating of the body tissue while absorbing electromagnetic mmW energy. Millimeter-wave frequencies yield penetration depths below 1 mm, therefore possible thermal damage is limited to the surface of the skin and the eyes; indeed, most of the energy is absorbed within the first 0.4 mm of the human skin at 42 GHz.

Governmental exposure guidelines are in place to prevent health issues due to thermal effects. Below 6 GHz, Specific Absorption Rate (SAR) has been used to determine the exposure threshold. SAR measures the energy absorbed by the human body when exposed to electromagnetic fields. The SAR limitation in the U.S. is 1.6 W/kg averaged over 1-g tissue from FCC, while in Europe it is 2W/kg averaged over 10-g tissue. The 1-g averaging provides a finer resolution for the study of energy absorption in the human body.

Nonetheless, for millimetre-wave regimes where the penetration depth is below 1 mm, even 1-g tissue is in fact a rather large volume. Being difficult to define a meaningful volume for SAR evaluation, it has been commonly accepted to use Power Density (PD) and not SAR to set the restrictions on exposure at millimeter-wave frequencies. It is thus a planar energy distribution as opposed to a volumetric one. Maximum Permissible Exposure (MPE) is a regulation based on PD for the millimeter-wave regime. The FCC and ICNIRP set the threshold for MPE at 10W/m² (1 mW/cm²), for the general public, between 6 or 10 GHz respectively and 100 GHz. The energy absorbed by the human body increases as a function of the distance to the UE. Therefore, to comply with the MPE limit, the UE may reduce its output power if the user gets in close vicinity of the antenna.

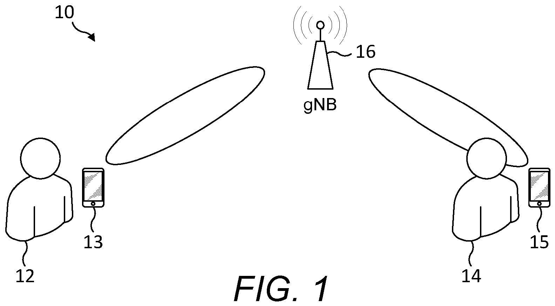

FIG. 1 is a block diagram of a system, indicated generally by the reference numeral 10, in accordance with an example embodiment. In the system 10, a first user 12 is using a first mobile communication device (UE) 13 to communicate with a network node (gNB) 16 and a second user 14 is using a second mobile communication device (UE) 15 to communicate with the network node 16.

As shown in FIG. 1, communications between the first device 13 and the network node 16 occur via an unobstructed Line of Sight (LOS) path, whereas the second user 14 stands at least partially in the path of a beam from the second device 15 to the network node 16.

Thus, the second user is exposed to a radiated beam between the second device 15 and the network node 16. As the user comes in close vicinity of the second device 15, the amount of energy absorbed by the user's body may be relatively large; as such the output power of the second device 15 may need to be reduced to comply with MPE requirements.

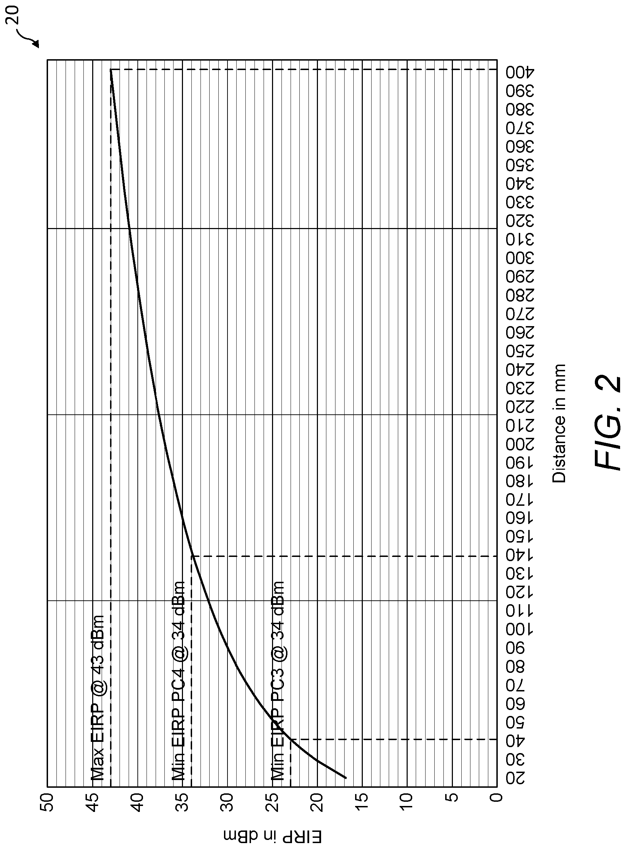

FIG. 2 is a graph, indicated generally by the reference numeral 20, showing maximum allowed equivalent isotropically radiated power (EIRP) depending on the distance between a user device (e.g. an antenna of the user device) and a user. As is clearly shown in the example graph 20, the maximum allowed EIRP reduces as the distance between the user device and the user is reduced.

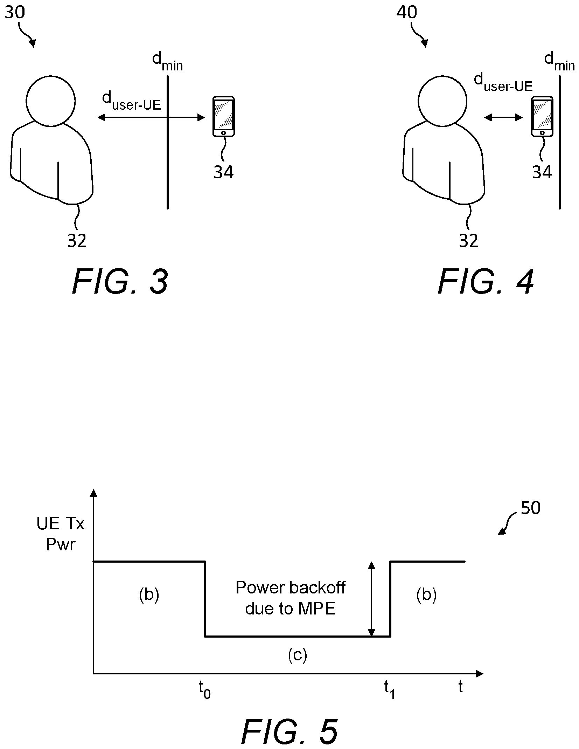

FIG. 3 is a block diagram of a system 30 in accordance with an example embodiment. The system 30 comprises a user 32 (similar to the users 12 and 14 described above) and a user device 34 (similar to the user devices 13 and 15 described above). In the system 30, the user 32 and the user device 34 are separated by a distance d_{user-UE} that is greater than a minimum safety distance dₘᵢₙ.

FIG. 4 is a block diagram of a system 40, indicated generally by the reference numeral 40, in accordance with an example embodiment. The system 40 comprises the user 32 and the user device 34 described above with reference to FIG. 3. However, in the system 40, the user 32 and the user device 34 are separated by a distance d_{user-UE} that is less than a minimum safety distance dₘᵢₙ.

When the distance between the user 32 and the user device 34 goes below the minimum safety distance dₘᵢₙ, then the user device is required to perform a power back-off in order to meet the MPE regulation requirements. This back-off is referred to herein as an MPE event.

FIG. 5 is a plot, indicated generally by the reference numeral 50, showing an example power back-off feature. The plot shows a user device transmit power (on the y-axis) plotted against time. As shown in the plot 50, the user device transmit power is reduced between times t₀ and t₁ (due to an MPE event). The user device transmit power may be reduced, for example, by reducing a duty cycle of uplink transmissions.

In the event that the user device 32 is communicating with a network element (such as the network node 16 described above) when a power back-off occurs, it is possible that the network node may be unable to receive enough power from the uplink transmission from the user device in order to decode successfully the transmitted payload from the user device. This may be the case, for example, since the link adaptation (e.g. the selection of MCS, TBS and UL transmission power) may have been performed when the user device was at a position above the dₘᵢₙ MPE triggering distance. Depending on the duration of the MPE event, a radio link failure (RLF) might also be triggered, resulting in disruption to a user experience and requiring the user device to reconnect to the relevant network (e.g. transition again to an RRC connected state).

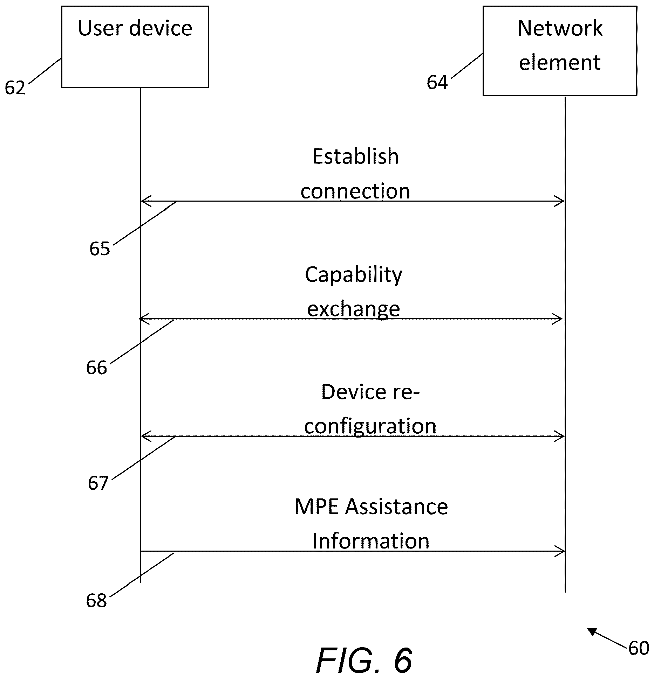

FIG. 6 is a message sequence, indicated generally by the reference numeral 60, in accordance with an example embodiment. The message sequence shows messages between a user device 62 (such as the user device 13, 15 or 34 described above) and a network element 64 (such as the network node 16 described above) that enables the user device 62 to inform the network element 64 of the occurrence of an MPE event. The message sequence 60 comprises establish connection messages 65, capability exchange messages 66, device re-configuration messages 67 and MPE assistance information 68. As discussed further below, the MPE assistance information 68 may be used to report the occurrence of an MPE event.

The message sequence 60 may be implemented using Radio Resource Control (RRC) protocols, as discussed further below.

The message sequence 60 starts with establish connection messages 65 in which the user device 62 establishes a connection with the network element 64. For example, the user device 62 may transition from a radio resource control (RRC) idle or inactive state to an RRC connected state.

The establish connection messages 65 are followed by capability exchange messages 66 in which the user device 62 informs the network element 64 of its capabilities, typically in response to requests for such information from the network element. In the context of the example embodiments described herein, the user device 62 informs the network element 64 that it is capable of providing MPE related UE assistance as part of the capability exchange messages 66.

Using the device re-configuration messages 67 (RRC reconfiguration), the network element 64 configures the users device 62 to be able to to report the MPE related UE assistance. This configuration may include details such as how often the user device 62 is allowed to perform this reporting (e.g. the range of allowable periodicity). For example, a long periodicity may be preferred in order to minimize signaling overhead. Alternatively, a small periodicity may be preferred to enable the network to react quickly (e.g. to adjust power back-off at the user device quickly). The re-configuration messages may be in accordance with existing RRC reconfiguration protocols.

Finally, upon detecting the occurrence of an MPE event, the user device 62 transmits to the network its MPE Assistance Information as part of the MPE assistance information message 68. As discussed in detail below, the transmission of the MPE event report timing may depends on the severity of the MPE conditions.

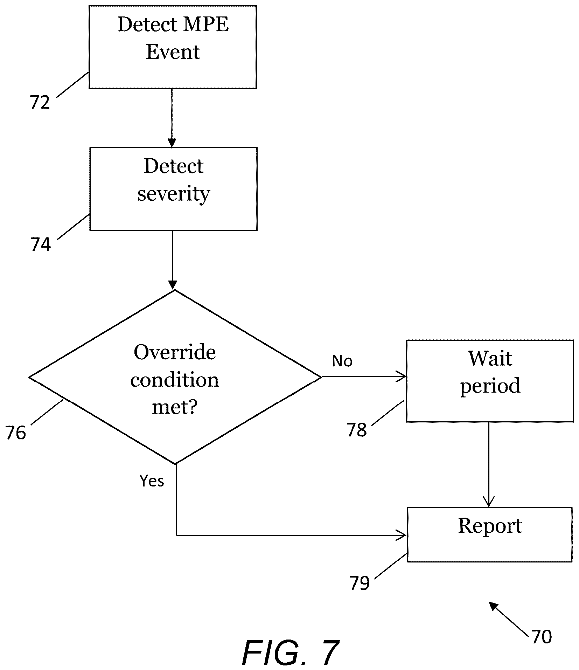

FIG. 7 is a flow chart showing an algorithm, indicated generally by the reference numeral 70, in accordance with an example embodiment.

The algorithm 70 starts at operation 72, where the occurrence of a maximum permissible exposure (MPE) event is detected. At operation 74, a severity of a detected MPE event is determined or otherwise detected.

At operation 76, a determination is made regarding whether an override condition (e.g. a periodic scheduling override condition) is met. An override condition may, for example, relate to a severity of the detected MPE event. The severity may be linked to the extent to which a transmit (uplink) duty-cycle needs to be reduced in order to overcome the MPE event. Alternatively, or in addition, the severity may be linked to the extent to which power back-off is required in order overcome the MPE event.

If operation 76 determines that the override condition is not met (e.g. if the severity of the MPE event is below a threshold level), then the algorithm 70 moves to a wait state 78. After the expiry of the wait state, then an MPE report (referred to below as a scheduled MPE report) is generated at operation 79.

If operation 76 determines that the override condition is met, then the algorithm 70 moves to operation 79, such that an MPE report is generated without waiting for the expiry of the wait state described above (referred to below as an unscheduled MPE report).

Thus, the algorithm 70 enables reporting of maximum permissible exposure assistance information (e.g. to a network element, such as the network element 64) in response to the detection of the occurrence of the maximum permissible exposure event. Moreover, the reporting of the maximum permissible exposure assistance information includes: generating a scheduled report in the event that the override condition is not met (e.g. is invalid) and generating an unscheduled report in the event that the override condition is met (i.e. is valid).

As discussed further below, a scheduled report may be sent when a first time period expires, whereas an unscheduled report may be sent without waiting for the first time period to expire.

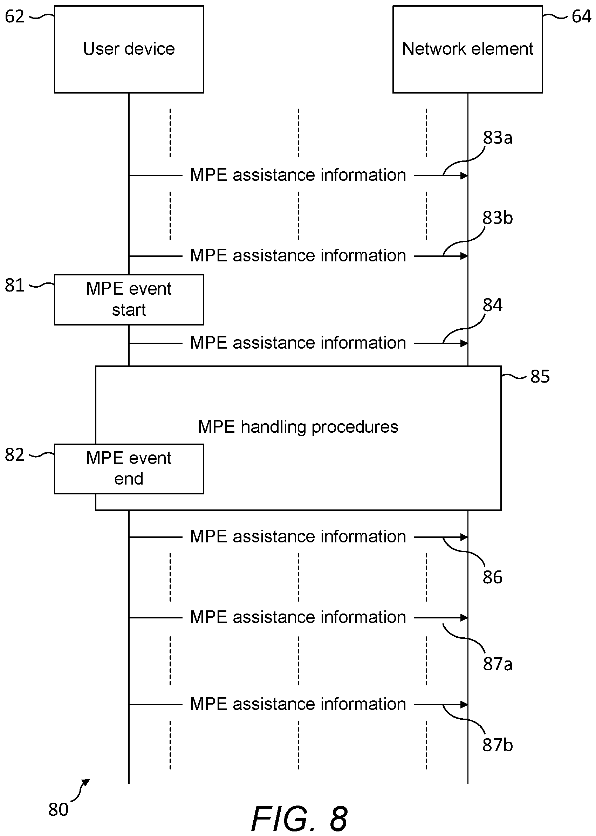

FIG. 8 is a message sequence, indicated generally by the reference numeral 80, in accordance with an example embodiment. The message sequence 80 shows messages between the user device 62 and the network element 64 described above that enables the user device 62 to inform the network element 64 of the occurrence of an MPE event. The messages sequence 80 shows details of an example implementation of the MPE assistance information message 68 described above.

The message sequence 80 shows the detection of an MPE event 81 at the user device 62 and the detection of the end of an MPE event 82 at the user device. The message sequence 80 shows how this information is communicated to the network element 64 in the event that the override condition of operation 76 of the algorithm 70 is not met (e.g. the MPE event is not considered to be severe).

As discussed further below, in circumstances when an MPE event is not considered to be severe, then MPE assistance information is sent at the expiry of a time period (e.g. a timer). Thus, MPE assistance information messages may be sent periodically.

The message sequence 80 includes a first potential MPE assistance information message 83a and a second potential MPE assistance information message 83b, both of which occur before the start of the MPE event 81. Since no MPE event is detected at these times, no MPE information is required to be sent in the potential messages 83a and 83b. Those potential message slots may simply be omitted; alternatively, a blank message may be sent, indicating that no MPE event has been detected.

Following the detection of the MPE event 81, an MPE assistance information message 84 is sent from the user device 62 to the network element 64. Since the MPE event 81 is deemed to not be severe, the MPE assistance information message 84 is sent at the next available one of the periodic potential MPE assistance information messages.

In response to the receipt of the MPE assistance information 84, MPE handling procedures 85 are enacted. The MPE handling procedures 85 may include means for triggering a power backoff in response to the maximum permissible exposure event in order to meet MPE regulation requirements. As discussed further below, the power backoff procedures may include changes to the uplink resources provided for the user device 62 to communicate with the network element 64 in order to meet the MPE requirements.

Once the end of the MPE event 82 is detected, an MPE assistance information message 86 is sent from the user device to the network element 64, for example at the next periodic message slot indicating the end of the MPE event.

The message sequence 80 includes further potential MPE assistance information messages 87a and 87b, both of which occur after then end of the MPE event. Following the message 86, no further MPE event is detected and so no MPE information is required to be sent in the potential messages 87a and 87b. As noted above, those potential message slots may simply be omitted; alternatively, a blank message may be sent, indicating that no MPE event has been detected.

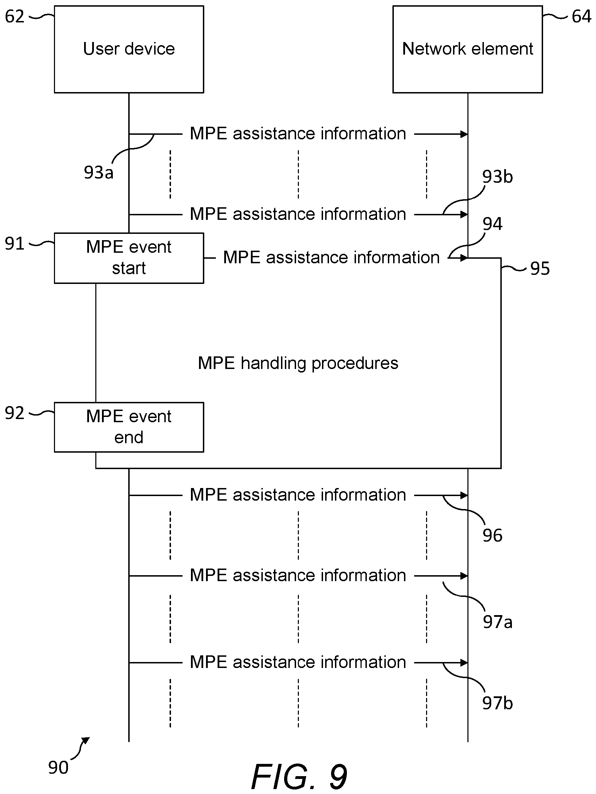

FIG. 9 is a message sequence, indicated generally by the reference numeral 90, in accordance with an example embodiment. The message sequence 90 shows messages between the user device 62 and the network element 64 described above that enables the user device 62 to inform the network element 64 of the occurrence of an MPE event. Thus, in common with the message sequence 80, the messages sequence 90 shows details of an example implementation of the MPE assistance information message 68 described above.

The message sequence 90 shows the detection of an MPE event 91 at the user device 62 and the detection of the end of an MPE event 92 at the user device. The message sequence 90 shows how this information is communicated to the network element 64 in the event that the override condition of operation 76 of the algorithm 70 is met (e.g. the MPE event is considered to be severe).

As discussed further below, in circumstances when an MPE event is considered to be severe, then MPE assistance information is sent without waiting for the expiry of a time period (e.g. a timer).

The message sequence 90 includes a first potential MPE assistance information message 93a and a second potential MPE assistance information message 93b, both of which occur before the start of the MPE event 91. Since no MPE event is detected at these times, no MPE information is required to be sent in the potential messages 93a and 93b. Those potential message slots may simply be omitted; alternatively, a blank message may be sent, indicating that no MPE event has been detected.

Following the detection of the MPE event 91, an MPE assistance information message 94 is sent from the user device 62 to the network element 64. Since the MPE event 91 is deemed to be severe, the MPE assistance information message 94 is sent without wait for the next available one of the periodic potential MPE assistance information messages.

In response to the receipt of the MPE assistance information 94, MPE handling procedures 95 are enacted. The MPE handling procedures are similar to the MPE handling procedures 85 discussed above; for example, the MPE handling procedures 95 may include changes to the uplink resources provided for the user device 62 to communicate with the network element 64 in order to meet the MPE requirements.

Once the end of the MPE event 92 is detected, an MPE assistance information message 96 is sent from the user device to the network element 64, for example at the next periodic message slot indicating the end of the MPE event.

The message sequence 90 includes further potential MPE assistance information messages 97a and 97b, both of which occur after then end of the MPE event. Following the message 96, no further MPE event is detected and so no MPE information is required to be sent in the potential messages 97a and 97b. As noted above, those potential message slots may simply be omitted; alternatively, a blank message may be sent, indicating that no MPE event has been detected.

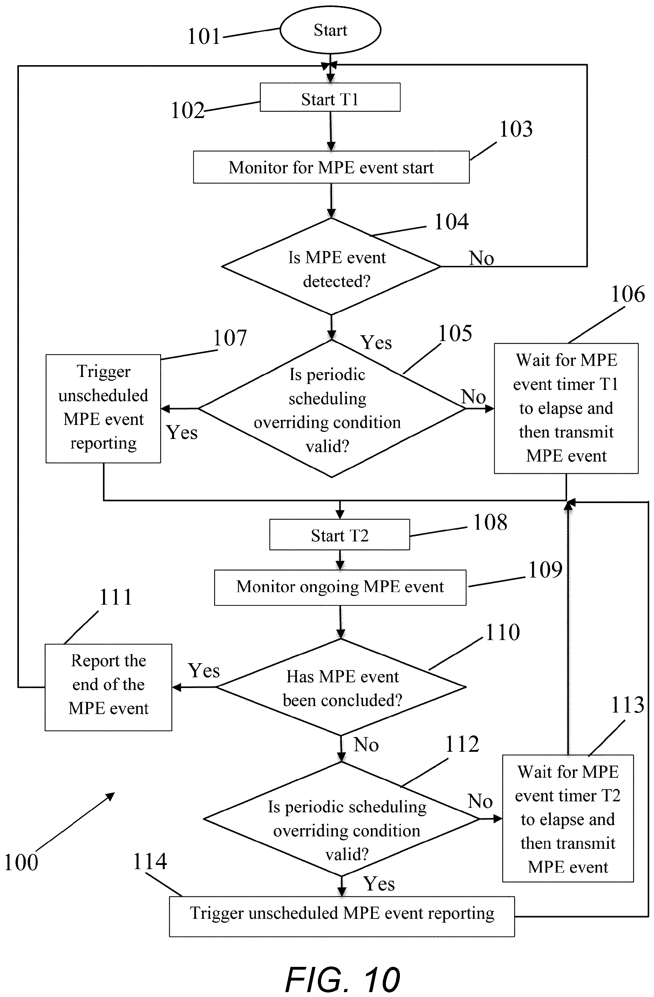

FIG. 10 is a flow chart showing an algorithm, indicated generally by the reference numeral 100, in accordance with an example embodiment. The algorithm 100 is initiated at operation 101. The algorithm 100 may be implemented at the user device 62 (or some similar user device). In some example embodiments, multiple instances of the algorithm 100 may be implemented at each of a plurality of user devices.

At operation 102, a first timer T1 is initiated (e.g. at the user device 62 described above). The first timer T1 is associated with the periodic reporting of MPE events.

At operation 103, the user device 62 starts monitoring for the start of an MPE event. This may be an internal user device process and may be implemented in many different ways. For example, proximity sensors may be provided to determine the presence of a user close to the user device or radar-based or similar detection methods may be provided.

At operation 104, the user device 62 determines whether an MPE event (such as the start of the MPE events 81 or 91 described above) has been detected. If an MPE event is detected, the algorithm 100 moves to operation 105. If an MPE event is not detected, the algorithm 100 returns to operation 102.

At operation 105, the user device 62 determines whether a periodic scheduling overriding condition is valid. As discussed elsewhere herein, a periodic scheduling override condition may be valid in the event that the MPE event is deemed to be severe. If the periodic scheduling override condition is not valid, then the algorithm 100 moves to operation 106. If the periodic scheduling override condition is valid, then the algorithm 100 moves to operation 107.

Example implementations of the operation 105 include considering a duty cycle threshold or a power back-off threshold. For example, the overriding condition may be met if a duty cycle reduction required due to the MPE event is below a duty cycle threshold level (e.g. 20%) due to the MPE event. Alternatively, or in addition, the overriding condition may be met if a power back-off required due to the MPE event is above a threshold level (e.g. a given dB level).

Alternatively, or in addition, the operation 105 may consider a flag that may be set to override periodic reporting. For example, user device 62 or a control module may be allowed to set a flag to override the periodic reporting (e.g. when the required duty cycle reduction is not achievable if the UE waits until the timer T1 elapses).

Thus, the operation 105 may include determining a severity of the detected maximum permissible exposure event. The operation 105 may include setting the periodic scheduling override condition to be valid in the event that the detected maximum permissible exposure event is determined to have a high severity.

At operation 106, the user device 62 waits for the timer T1 to lapse and then transmits the MPE event report. Thus, the operation 106 results in a periodic MPE report being transmitted (as discussed above with reference to the message sequence 80). The algorithm 100 then moves to operation 108.

At operation 107, the user device 62 triggers the transmission of the MPE event reporting, without waiting for the timer T1 to lapse (as discussed above with reference to the message sequence 90). The algorithm 100 then moves to operation 108.

At operation 108, a second timer T2 is set. The first timer T1 and the second timer T2 may have the same duration or different durations; for example, the second timer duration may be shorter than the first. The timers may be two instances of the same timer or may be separate timers.

At operation 109, the user device 62 monitors the ongoing MPE event. Then, at operation 110, a determination is made regarding whether or not the MPE event has concluded. For example, a determination may be made regarding whether the distance between the user device 62 and a user is above the dₘᵢₙ distance discussed above. The operation 110 may determine that the MPE event has ended in the event that the maximum permissible exposure event ends before a period of the second timer expires.

If it is determined in operation 110 that the MPE event has concluded, the algorithm 100 moves to operation 111; otherwise, the algorithm 100 moves to operation 112.

At operation 111, the end of the MPE event is reported (e.g. by the user device 62 to the network element 64). The operation 111 may be implemented, for example, by the message 86 of the message sequence 80 or the message 96 of the message sequence 90 described above. Once the end of the MPE has been reported, the algorithm 100 returns to operation 102.

At operation 112 (where it is determined that the MPE event is going), the user device 62 determines whether a periodic scheduling overriding condition is valid. As discussed with reference to operation 105, a periodic scheduling override condition may be valid in the event that the MPE event is deemed to be severe. If the periodic scheduling override condition is not valid, then the algorithm 100 moves to operation 113. If the periodic scheduling overriding condition is valid, then the algorithm 100 moves to operation 114.

Example implementations of the operation 112 include considering a duty cycle threshold, a power back-off threshold or a flag. The overriding condition in operation 112 may be the same as the condition in operation 105, but this is not essential. For example, the overriding condition in operation 112 may be stricter than the condition in operation 105 or stricter than the actual condition of the user device at that time, thereby determining whether or not the MPE event is getting worse (e.g. is the user device 62 moving closer to the user).

At operation 113, the user device 62 waits for the second timer T2 to lapse and then transmits the MPE event report. Thus, the operation 113 results in a periodic MPE report being transmitted. The algorithm 100 then returns to operation 108.

At operation 114, the user device 62 triggers the transmission of the MPE event reporting, without waiting for the second timer T2 to lapse. The algorithm 100 then returns to operation 108.

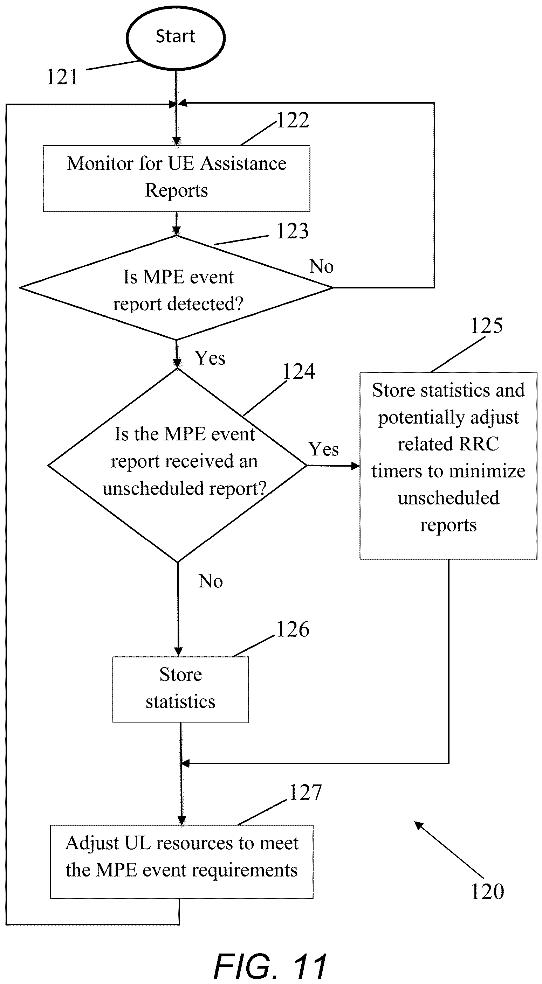

FIG. 11 is a flow chart showing an algorithm, indicated generally by the reference numeral 120, in accordance with an example embodiment. The algorithm 120 is initiated at operation 121. The algorithm 120 may be implemented at the network element 64 (or some similar node).

At operation 122, the network element 64 monitors for the reception of a UE assistance report from a user device (such as the user device 62). At operation 123, on detection of a UE assistance report, a determination is made (e.g. at the network element 64) regarding whether the received UE Assistance report is an MPE event report (e.g. a message such as the messages 84 or 94 described above).

If a received MPE event report is detected at operation 123, then the algorithm 120 moves to operation 124; otherwise, the operation 120 returns to operation 122.

At operation 124, the network element 64 determines whether the received report follows the current expected periodicity (i.e. T1 for the case of MPE event detection or T2 for the case of an ongoing MPE event). If not, the received MPE report is identified as an unscheduled report and the algorithm 120 moves to operation 125. Otherwise, the received MPE report is identified as a scheduled report and the algorithm 120 moves to operation 126.

At operation 125, information is extracted (e.g. at the network element 64) about the user device triggering the unscheduled report and this information is used to create statistics. Such MPE event statistics may be generated and stored on receipt of an MPE event report. Moreover, one or more time periods (e.g. timers) of the MPE event protocol may be updated, in order to reduce the instances of unscheduled reports. By way of example, the timers (or time periods) may be updated using machine learning algorithms.

By way of example, the values associated with the first and/or the second timers described above may be adjusted. It should be noted that, in certain cells (or even for individual users), the occurrence of MPE events will be different. For example, a specific user might regularly hold the user deice close to their head in a talk mode, while another one might consistently use a headset with the user device placed on a surface away from the user. In the latter case it is expected that fewer MPE events will occur and as such the T1 and T2 timers can be more relaxed.

At operation 126, information is extracted (e.g. at the network element 64) about the user device triggering the scheduled report and this information is used to create statistics. Such MPE event statistics may be generated and stored on receipt of an MPE event report.

At operation 127, the uplink resources of the user device 62 are adjusted, for example to meet the MPE power back-off requirements. In one example embodiment, an uplink duty cycle may be modified in the operation 127.

The uplink resources may also be modified by defining a first timer start time for a particular user device, wherein said scheduled report is sent by said user device to said apparatus in the event of the expiry of said first timer. Moreover, the first timer start time may be set to be different for different user devices, such that the first timers (and hence the scheduled reports) are staggered.

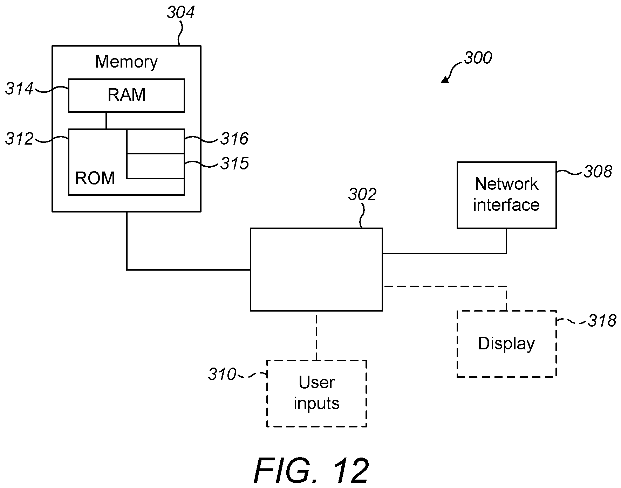

For completeness, FIG. 12 is an example schematic diagram of components of one or more of the modules for implementing the algorithms described above, which hereafter are referred to generically as processing systems 300. A processing system 300 may have a processor 302, a memory 304 coupled to the processor and comprised of a RAM 314 and ROM 312, and, optionally, user inputs 310 and a display 318. The processing system 300 may comprise one or more network interfaces 308 for connection to a network, e.g. a modem which may be wired or wireless.

The processor 302 is connected to each of the other components in order to control operation thereof.

The memory 304 may comprise a non-volatile memory, a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor, implements aspects of the algorithms and message sequences 60, 70, 80, 90, 100 and 120.

The processor 302 may take any suitable form. For instance, it may be a microcontroller, plural microcontrollers, a processor, or plural processors. Processor 302 may comprise processor circuitry.

The processing system 300 may be a standalone computer, a server, a console, or a network thereof.

In some example embodiments, the processing system 300 may also be associated with external software applications. These may be applications stored on a remote server device and may run partly or exclusively on the remote server device. These applications may be termed cloud-hosted applications. The processing system 300 may be in communication with the remote server device in order to utilize the software application stored there.

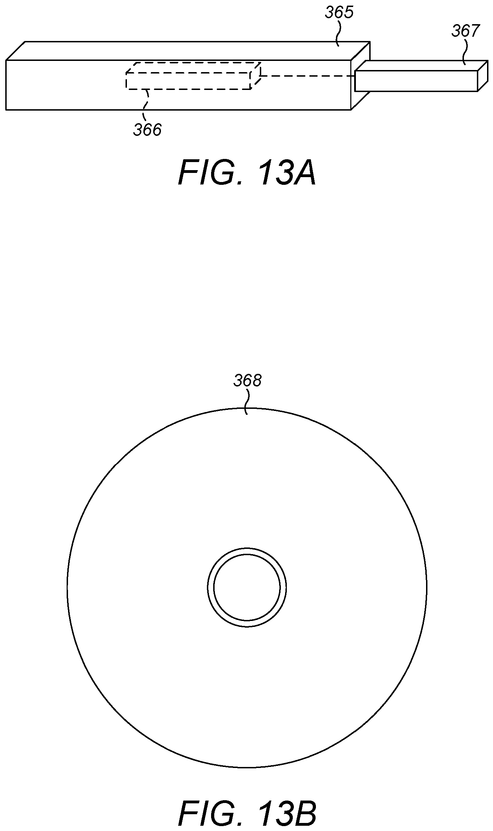

FIG. 13A and FIG. 13B show tangible media, respectively a removable memory unit 365 and a compact disc (CD) 368, storing computer-readable code which when run by a computer may perform methods according to example embodiments described above. The removable memory unit 365 may be a memory stick, e.g. a USB memory stick, having internal memory 366 storing the computer-readable code. The memory 366 may be accessed by a computer system via a connector 367. The CD 368 may be a CD-ROM or a DVD or similar. Other forms of tangible storage media may be used.

Some example embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

If desired, the different functions discussed herein may be performed in a different order and/or concurrently with each other. Furthermore, if desired, one or more of the above-described functions may be optional or may be combined. Similarly, it will also be appreciated that the flow diagrams and message sequences of FIGS. 6 to 11 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

Example embodiments described herein may be implemented as part of an existing RRC protocol (such as the specification TS38.311: Radio Resource Control protocol specification).

In the following, we introduce the text that needs to be added into TS 38.331 to enable this functionality. We highlight with underlinings the new added functionality.

### Changes in "5.3.5 RRC reconfiguration"

**Note:** In this section we define the MPE functionality at UE upon the reception of the RRC reconfiguration message.

### ***** Partial omitted *****

### 5.3.5.9 Other configuration

The UE shall:
1> if the received *otherConfig* includes the *delayBudgetReportingConfig:*
   2> if *delayBudgetReportingConfig* is set to *setup*:
      3> consider itself to be configured to send delay budget reports in accordance with 5.7.4;
   2> else:
      3> consider itself not to be configured to send delay budget reports and stop timer T342, if running.
1> if the received *otherConfig* includes the *overheatingAssistanceConfig*:
   2> if *overheatingAssistanceConfig* is set to *setup*:
      3> consider itself to be configured to provide overheating assistance information in accordance with 5.7.4;
   2> else:
      3> consider itself not to be configured to provide overheating assistance information and stop timer T345, if running;
1> if the received *otherConfig* includes the *myeAssistanceConfig*:
   2> if mpe*AssistanceConfig* is set to *setup:*
      3> consider itself to be configured to provide MPE assistance information in accordance with 5.7.4.3;
   2> else:
      3> consider itself not to be configured to provide MPE assistance information and stop timer TXYZ, if running;

### ***** Partial omitted *****

### Changes in "5.3.7 RRC connection re-establishment"

**Note:** Here we ensure that the UE flushes the previous MPE Assistance Configuration upon an RRC connection re-establishment.

### ***** Partial omitted *****

### 5.3.7.2 Initiation

The UE initiates the procedure when one of the following conditions is met:
1> upon detecting radio link failure of the MCG, in accordance with 5.3.10; or
1> upon re-configuration with sync failure of the MCG, in accordance with sub-clause 5.3.5.8.3; or
1> upon mobility from NR failure, in accordance with sub-clause 5.4.3.5; or
1> upon integrity check failure indication from lower layers concerning SRB1 or SRB2, except if the integrity check failure is detected on the *RRCReestablishment* message; or
1> upon an RRC connection reconfiguration failure, in accordance with sub-clause 5.3.5.8.2.

Upon initiation of the procedure, the UE shall:
1> stop timer T310, if running;
1> stop timer T304, if running;
1> start timer T311;
1> suspend all RBs, except SRB0;
1> reset MAC;
1> release the MCG SCell(s), if configured;
1> release *spCellConfig;*
1> release *delayBudgetReportingConfig,* if configured, and stop timer T342, if running;
1> release *overheatingAssistanceConfig,* if configured, and stop timer T345, if running;
1> release mpeAssistanceConfig, if configured, and stop timer Txyz, if running;
1> perform cell selection in accordance with the cell selection process as specified in TS 38.304 [20], clause 5.2.6.

### ***** Partial omitted *****

### Changes in "5.3.13 RRC connection resume"

**Note:** Here we ensure that the UE flushes the previous MPE Assistance Configuration upon a RRC connection resume.

### ***** Partial omitted *****

### 5.3.13.2 Initiation

### ***** Partial omitted *****

1> release *delayBudgetReportingConfig* from the UE Inactive AS context, if stored;
1> stop timer T342, if running;
1> release overheatingAssistanceConfig from the UE Inactive AS context, if stored;
1> stop timer T345, if running;
1> release mpeAssistanceConfig from the UE Inactive AS context, if stored;
1> stop timer Txyz, if running;
1> apply the CCCH configuration as specified in 9.1.1.2;
1> apply the timeAlignmentTimerCommon included in SIB1;
1> start timer T319;
1> set the variable pendingRnaUpdate to false;
1> initiate transmission of the RRCResumeRequest message or RRCResumeRequest1 in accordance with 5.3.13.3.

### ***** Partial omitted *****

### Changes in "5.7.4 UE Assistance Information"

**Note:** Here we describe the behaviour of the UE when it should start transmitting the UE Assistance Information.

The purpose of this procedure is to inform the network of the UE's delay budget report carrying desired increment/decrement in the Uu air interface delay, connected mode DRX cycle length, overheating assistance information or MPE assistance information.

### 5.7.4.2 Initiation

A UE capable of providing delay budget report in RRC_CONNECTED may initiate the procedure in several cases, including upon being configured to provide delay budget report and upon change of delay budget preference.

A UE capable of providing overheating assistance information in RRC _CONNECTED may initiate the procedure if it was configured to do so, upon detecting internal overheating, or upon detecting that it is no longer experiencing an overheating condition.

A UE capable of providing MPE assistance information in RRC CONNECTED may initiate the procedure if it was configured to do so, upon detecting the MPE event (i.e. that the UE is below the dmin distance towards the user), or upon detecting that it is no longer experiencing an MPE event.

Upon initiating the procedure, the UE shall:
1> if configured to provide delay budget report:
   2> if the UE did not transmit a UEAssistanceInformation message with delayBudgetReport since it was configured to provide delay budget report; or
   2> if the current delay budget is different from the one indicated in the last transmission of the UEAssistanceInformation message and timer T342 is not running:
      3> initiate transmission of the UEAssistanceInformation message in accordance with 5.7-4.3;
1> if configured to provide overheating assistance information:
   2> if the overheating condition has been detected and T345 is not running; or
   2> if the current overheating assistance information is different from the one indicated in the last transmission of the UEAssistanceInformation message and timer T345 is not running:
      3> initiate transmission of the UEAssistanceInformation message in accordance with 5.7-4.3;
1> if configured to provide MPE assistance information:
   2> if the MPE condition has been detected and Txvz is not running; or
   2> if the current MPE assistance information is different from the one indicated in the last transmission of the UEAssistanceInformation messages and timer Txyz is not running:
      3> initiate transmission of the UEAssistanceInformation message in accordance with 5.7.4.3;

### 5.7.4.3 Actions related to transmission of UEAssistancelnformation message

### ***** Partial omitted *****

The UE shall set the contents of the UEAssistanceInformation message for the MPE event report as follows:
1> if the UE experiences an MPE event:
   2> if the UE reports the desired UL duty cycle reduction
      3> include the ueReducedDutvCvcle in the MPEAssistance IE;
   2> if the UE reports the desired UL power backoff
      3> include the uePowerBackoffRequired in the MPEAssistance IE;
   2> start time Txyz with the timer value set to the mpeIndicationProhibitTimer2;
1> else (if the UE no longer experiences an MPE event)
   2> do not include ueReducedDutvCvcle and uePowerBackoffRequired in MPEAssistance IE;
   2> start timer Txyz with the timer value set to the mpeIndicationProhibitTimen.

### Changes in "6.2.2 Message definitions"

Note: Here we introduce the changes required in the UE Assistance Information to support the MPE functionality.

### ***** Partial omitted *****

### - UEAssistanceInformation

The *UEAssistanceInformation* message is used for the indication of UE assistance information to the network.
Signalling radio bearer: SRB1
RLC-SAP: AM
Logical channel: DCCH
Direction: UE to Network

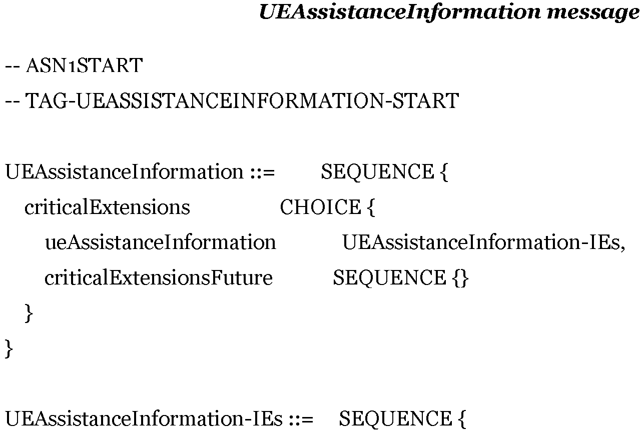

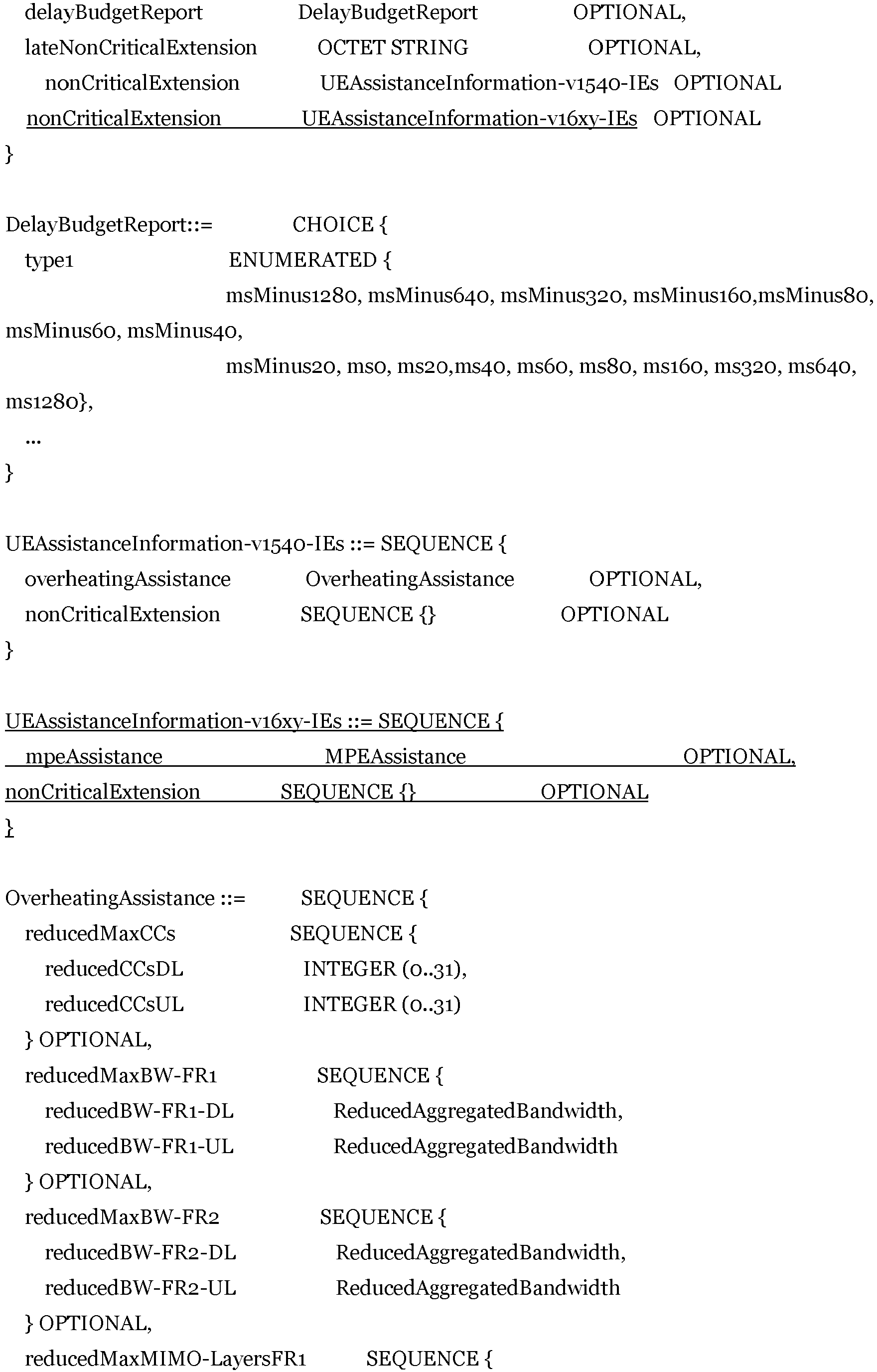

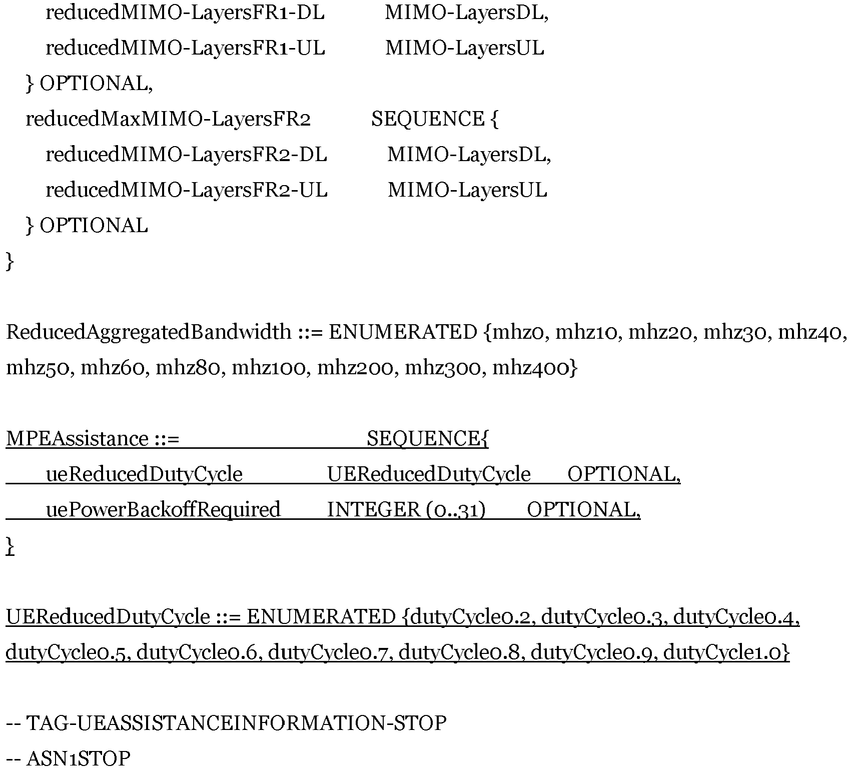

| ***UEAssistanceInformation* field descriptions** |
|---|
| *delayBudgetReport* |
| Indicates the UE-preferred adjustment to connected mode DRX. |
| *reducedBW-FR1-DL* |
| Indicates the UE's preference on reduced configuration corresponding to the maximum aggregated bandwidth across all downlink carriers of FRt indicated by the field, to address overheating. This field is allowed to be reported only when UE is configured with serving cells operating on FR1. |
| *reducedBW-FR1-UL* |
| Indicates the UE's preference on reduced configuration corresponding to the maximum aggregated bandwidth across all uplink carriers of FR1 indicated by the field, to address overheating. This field is allowed to be reported only when UE is configured with serving cells operating on FR1. |
| *reducedBW-FR2-DL* |
| Indicates the UE's preference on reduced configuration corresponding to the maximum aggregated bandwidth across all downlink carriers of FR2 indicated by the field, to address |
| overheating. This field is allowed to be reported only when UE is configured with serving cells operating on FR2. Value *mhzo* is only applicable for FR2. |
| *reducedBW-FR2-UL* |
| Indicates the UE's preference on reduced configuration corresponding to the maximum aggregated bandwidth across all uplink carriers of FR2 indicated by the field, to address overheating. This field is allowed to be reported only when UE is configured with serving cells operating on FR2. Value *mhzo* is only applicable for FR2. |
| *reducedCCsDL* |
| Indicates the UE's preference on reduced configuration corresponding to the maximum number of downlink SCells indicated by the field, to address overheating. |
| *reducedCCsUL* |
| Indicates the UE's preference on reduced configuration corresponding to the maximum number of uplink SCells indicated by the field, to address overheating. |
| *reducedMIMO-LayersFR1-DL* |
| Indicates the UE's preference on reduced configuration corresponding to the maximum number of downlink MIMO layers of each serving cell operating on FR1 indicated by the field, to address overheating. This field is allowed to be reported only when UE is configured with serving cells operating on FR1. |
| *reducedMIMO-LayersFR1-UL* |
| Indicates the UE's preference on reduced configuration corresponding to the maximum number of uplink MIMO layers of each serving cell operating on FR1 indicated by the field, to address overheating. This field is allowed to be reported only when UE is configured with serving cells operating on FR1. |
| *reducedMIMO-LayersFR2-DL* |
| Indicates the UE's preference on reduced configuration corresponding to the maximum number of downlink MIMO layers of each serving cell operating on FR2 indicated by the field, to address overheating. This field is allowed to be reported only when UE is configured with serving cells operating on FR2. |
| *reducedMIMO-LayersFR2-UL* |
| Indicates the UE's preference on reduced configuration corresponding to the maximum number of uplink MIMO layers of each serving cell operating on FR2 indicated by the field, to address overheating. This field is allowed to be reported only when UE is configured with serving cells operating on FR2. |
| *typei* |
| Indicates the preferred amount of increment/decrement to the long DRX cycle length with respect to the current configuration. Value in number of milliseconds. Value *ms40* corresponds to 40 milliseconds, *msMinus40* corresponds to -40 milliseconds and so on. |
| ueReducedDutyCycle |
| Indicates what is the UE preferred UL transmissions duty cycle reduction. dutyCycle0.1 corresponds to a duty cycle of 10%. |
| uePowerBackoffRequired Indicates what is the UE preferred UL power backoff. The reported values are in the dB. |

### ***** Partial omitted *****

### Changes in "6.3.3 UE capability information elements"

**Note:** Here we introduce the elements that allow the UE to inform the network that is able to provide MPE related UE Assistance.

### ***** Partial omitted *****

### - UE-NR-Capability

The IE *UE-NR-Capability* is used to convey the NR UE Radio Access Capability Parameters, see TS 38.306 [26].

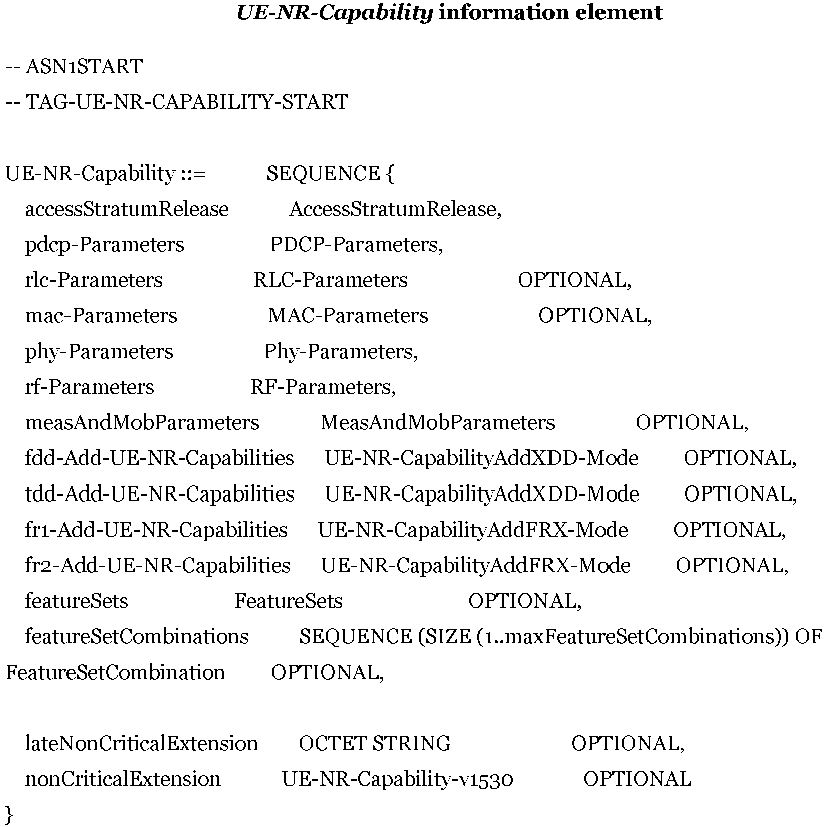

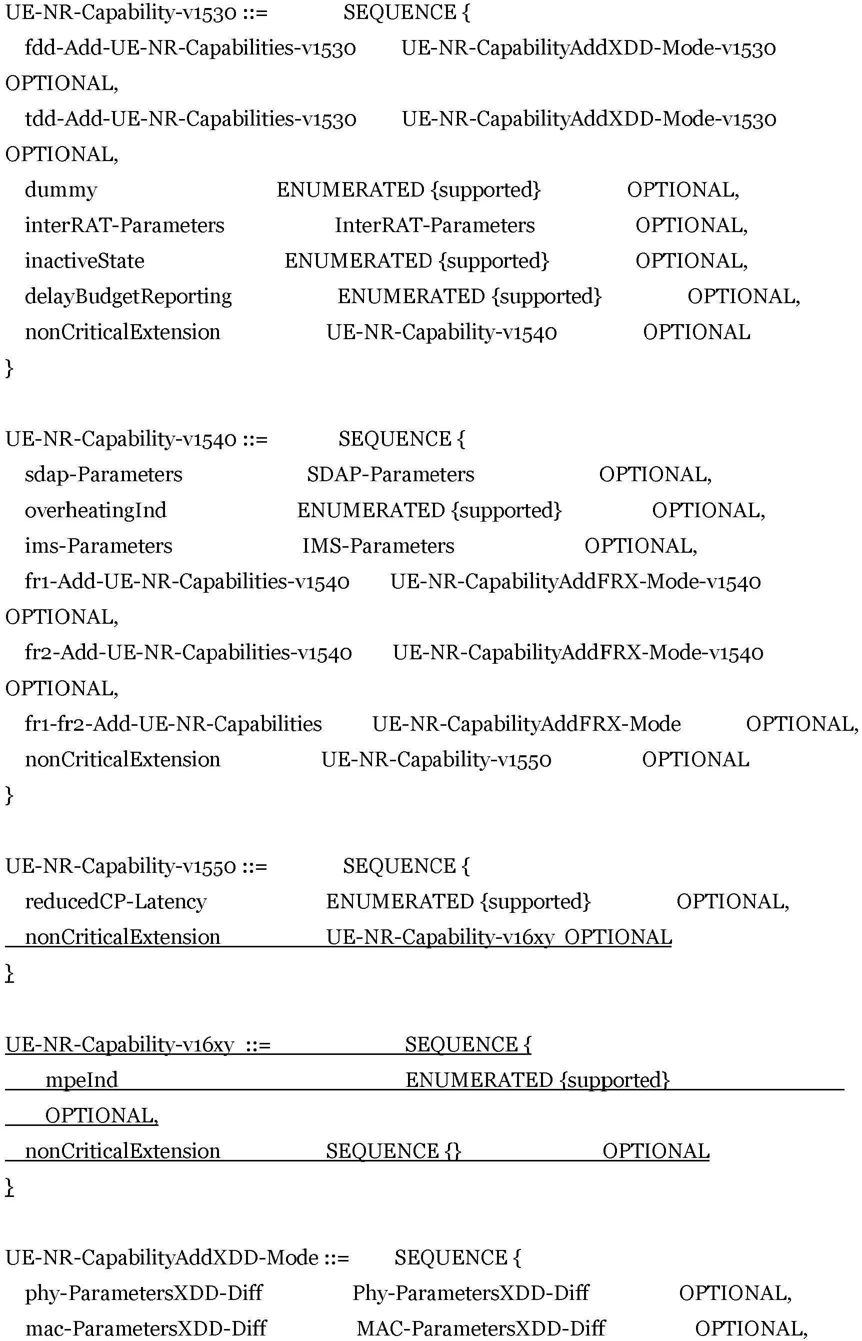

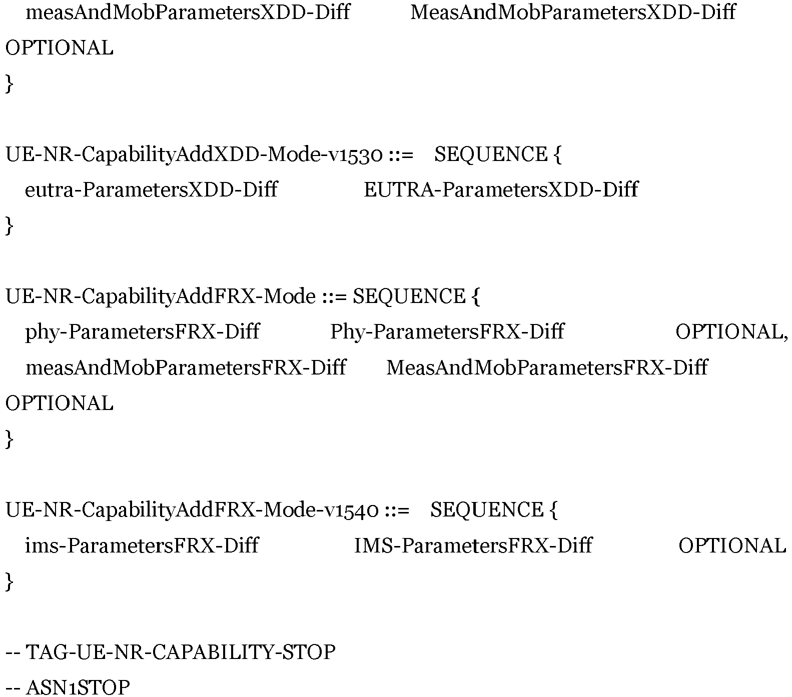

| ***UE-NR-Capability* field descriptions** |
|---|
| ***featureSetCombinations*** |
| A list of *FeatureSetCombination:s* for NR (not for MR-DC). The *FeatureSetDownlink:s* and *FeatureSetUplink:s* referred to from these *FeatureSetCombination:s* are defined in the *featureSets* list in *UE-NR-Capability.* |

### ***** Partial omitted *****

### Changes in "6.3.4 Other information elements"

**Note:** In this section we introduce the required RRC information element changes so that a prohibit timer associated with the MPE reporting is defined. This prohibit timer is used by the network to control how often is the UE allowed to trigger the MPE report.

### ***** Partial omitted *****

### - OtherConfig

The IE *OtherConfig* contains configuration related to miscellaneous other configurations.

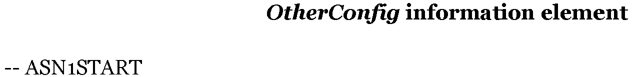

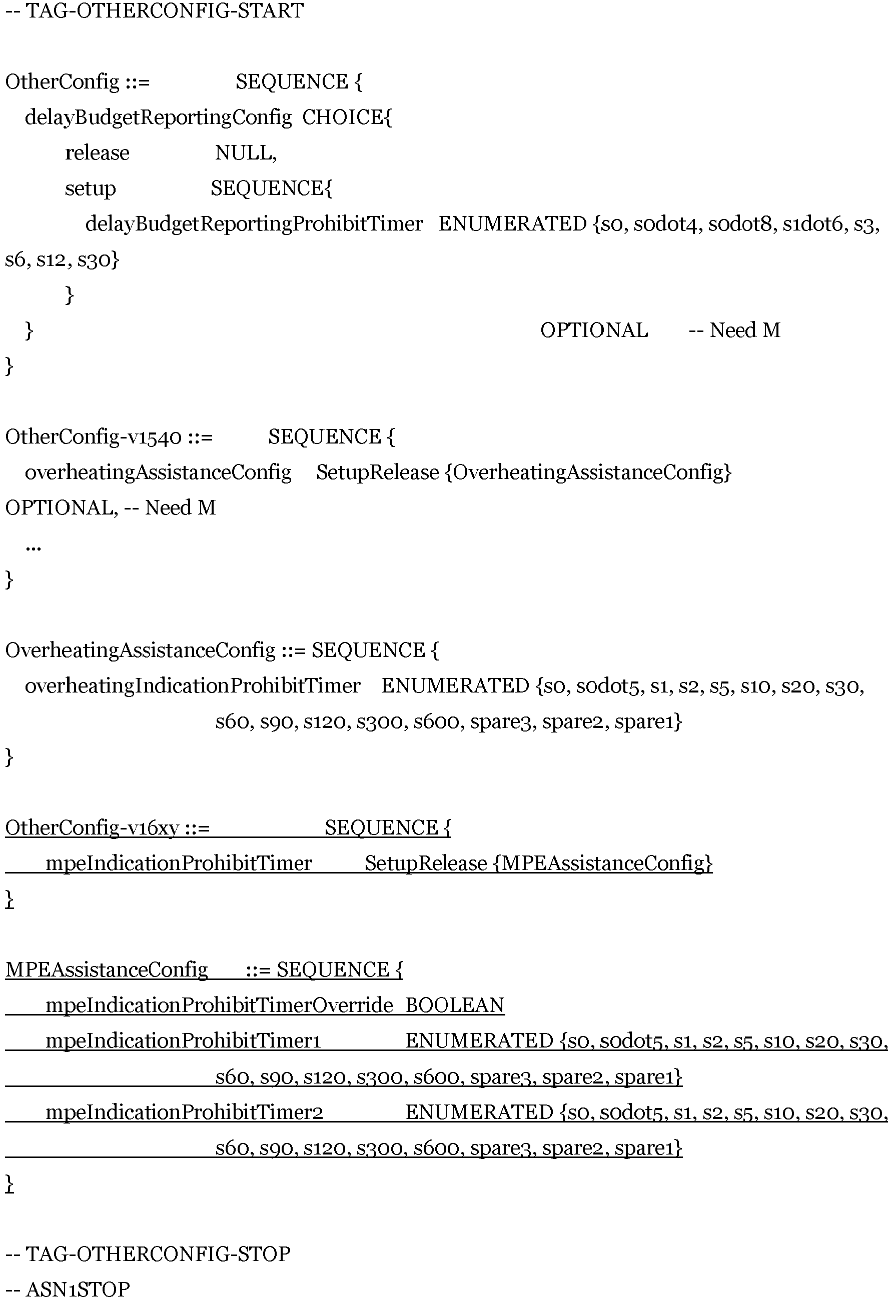

| ***OtherConfig* field descriptions** |
|---|
| *delayBudgetReportingProhibitTimer* |
| Prohibit timer for delay budget reporting. Value in seconds. Value so means prohibit timer is set to 0 seconds, value *sodot4* means prohibit timer is set to 0.4 seconds, and so on. |
| *overheatingAssistanceConfig* |
| Configuration for the UE to report assistance information to inform the gNB about UE detected internal overheating. |
| *overheatingIndicationProhibitTimer* |
| Prohibit timer for overheating assistance information reporting. Value in seconds. Value so means prohibit timer is set to 0 seconds, value *sodot5* means prohibit timer is set to 0.5 seconds, value *s1* means prohibit timer is set to 1 second and so on. |
| *MIPEAssistanceConfig* |
| *Configuration for the UE to report assistance information to inform the gNB about UE detected MPE event.* |
| mpeIndicationProhibitTimerOverride |
| *Allows the UE to overrived the configured prohibit timers in case the power backoff due to the duty cycle cannot be met within the remaining timer.* |
| *mpeIndicationProhibitTimer1* |
| *Prohibit timer for the MPE assistance information reporting for UEs not experiencing an* *MPE event. Value in seconds. Value* so *means prohibit timer is set to o seconds, value sodot5* *means prohibit timer is set to 0.5 seconds, and so on.* |
| *mpeIndicationProhibitTimer2* |
| *Prohibit timer for the MPE assistance information reporting for UEs experiencing an MPE* *event. Value in seconds. Value* so *means prohibit timer is set to o seconds, value sodot5* *means prohibit timer is set to 0.5 seconds, and* so *on.* |

### ***** Partial omitted *****

### Changes on "7.1.1 Timers (Informative)"

**Note:** Here we introduce a timer that allows to control how often can the MPE related UE Assistance message.

### ***** Partial omitted *****

| **Timer** | **Start** | **Stop** | **At expiry** |
|---|---|---|---|
| Txyz | Upon transmitting *UEAssistanceInformat ion* message with mpe*Assistance* | Upon initiating the connection re-establishment procedure and upon | No action. |

| | | | |
|---|---|---|---|
| | | initiating the connection resumption procedure | |

***** Partial omitted *****

## Claims

1. An apparatus comprising:
means for detecting (72, 104) an occurrence of a maximum permissible exposure event;
means for determining (74) a severity of the detected maximum permissible exposure event;
means for setting a periodic scheduling override condition to be valid in the event that the detected maximum permissible exposure event is determined to have a high severity; and
means for reporting (79) maximum permissible exposure assistance information in response to the detection of the occurrence of the maximum permissible exposure event, wherein the means for reporting the maximum permissible exposure assistance information is configured to:
generate a scheduled report in the event that the periodic scheduling override condition is invalid, wherein the scheduled report is sent when a first time period expires; and
generate an unscheduled report in the event that the periodic scheduling override condition is valid, wherein the unscheduled report is sent without waiting for the first time period to expire.

2. An apparatus as claimed in claim 1, wherein the detected maximum permissible exposure event is determined to have a high severity in the event that a duty cycle reduction required to address said exposure event is above a threshold.

3. An apparatus as claimed in claim 1 or claim 2, further comprising means for monitoring (109) an ongoing maximum permissible exposure event and, optionally, further comprising means for reporting (111) that the maximum permissible exposure event has ended in the event that the maximum permissible exposure event ends before a second time period expires.

4. An apparatus as claimed in any one of the preceding claims, further comprising a first timer for monitoring said first time period.

5. An apparatus as claimed in any one of the preceding claims, further comprising at least one of:
means for indicating that the apparatus is capable of providing maximum permissible exposure assistance information;
means for triggering a power backoff in response to the maximum permissible exposure event; and
means for triggering a duty cycle adjustment in response to the maximum permissible exposure event.

6. An apparatus comprising:
means for detecting (123) a maximum permissible exposure event report;
means for determining (124) whether the detected maximum permissible exposure report is a scheduled report or an unscheduled report;
means for determining (125) whether one or more time periods of a maximum permissible exposure event protocol should be updated in the event the detected maximum permissible exposure event report is determined to be an unscheduled report, in order to reduce the instances of unscheduled reports; and
means for adjusting (127) uplink resources to meet maximum permissible exposure power backoff requirements.

7. An apparatus as claimed in claim 6, further comprising means for storing maximum permissible exposure event statistics on receipt of a maximum permissible exposure event report.

8. An apparatus as claimed in claim 6 or claim 7, further comprising means for receiving an indication that a remote user device is capable of providing maximum permissible exposure related assistance information.

9. An apparatus as claimed in any one of claims 6 to 8, further comprising means for defining a first timer start time for a user device, wherein said scheduled report is sent by said user device to said apparatus in the event of the expiry of said first timer, wherein said means for defining a first timer start time optionally defines first timer start times for each of a plurality of user devices.

10. An apparatus as claimed in any one of the preceding claims, further comprising means for reconfiguring user device protocols to enable maximum permissible exposure assistance information to be communicated between a user device and a network element.

11. An apparatus as claimed in claim 10, wherein said maximum permissible exposure assistance information is provided as part of a modified L3-based UE assistance signalling procedure.

12. A method comprising:
detecting (72, 104) an occurrence of a maximum permissible exposure event;
determining (74) a severity of the detected maximum permissible exposure event and setting a periodic scheduling override condition to be valid in the event that the detected maximum permissible exposure event is determined to have a high severity; and
reporting (79) maximum permissible exposure assistance information in response to the detection of the occurrence of the maximum permissible exposure event,
wherein reporting the maximum permissible exposure assistance information comprises: generating a scheduled report in the event that the periodic scheduling override condition is invalid, wherein the scheduled report is sent when a first time period expires; and generating an unscheduled report in the event that the periodic scheduling override condition is valid, wherein the unscheduled report is sent without waiting for the first time period to expire.

13. A method comprising:
detecting (123) a maximum permissible exposure event report;
determining (124) whether the detected maximum permissible exposure report is a scheduled report or an unscheduled report;
determining (125) whether one or more time periods of a maximum permissible exposure event protocol should be updated in the event that the detected maximum permissible exposure event report is determined to be an unscheduled report, in order to reduce the instances of unscheduled reports; and
adjusting (127) uplink resources to meet maximum permissible exposure power backoff requirements.

14. A computer program comprising instructions, which when the program is executed by a computer, cause the computer to carry out at least the following:
detecting an occurrence of a maximum permissible exposure event; and
determining a severity of the detected maximum permissible exposure event;
setting a periodic scheduling override condition to be valid in the event that the detected maximum permissible exposure event is determined to have a high severity; and
reporting maximum permissible exposure assistance information in response to the detection of the occurrence of the maximum permissible exposure event,
wherein reporting the maximum permissible exposure assistance information comprises: generating a scheduled report in the event that the periodic scheduling override condition is invalid, wherein the scheduled report is sent when a first time period lapses; and generating an unscheduled report in the event that the periodic scheduling override condition is valid, wherein the unscheduled report is sent without waiting for the first time period to expire.

15. A computer program comprising instructions, which when the program is executed by a computer, cause the computer to carry out at least the following:
detecting a maximum permissible exposure event report;
determining whether the detected maximum permissible exposure report is a scheduled report or an unscheduled report;
determining whether one or more time periods of a maximum permissible exposure event protocol should be updated in the event that the detected maximum permissible exposure event report is determined to be an unscheduled report, in order to reduce the instances of unscheduled reports; and
adjusting uplink resources to meet maximum permissible exposure power backoff requirements.

## Patentansprüche

1. Einrichtung, die Folgendes umfasst:
Mittel zum Detektieren (72, 104) eines Eintretens eines maximal zulässigen Expositionsereignisses;
Mittel zum Bestimmen (74) eines Schweregrads des detektierten maximal zulässigen Expositionsereignisses;
Mittel zum Einstellen einer periodischen Planungsaufhebungsbedingung derart, dass sie in dem Fall gültig ist, in dem bestimmt wird, dass das detektierte maximal zulässige Expositionsereignis einen hohen Schweregrad aufweist; und
Mittel zum Melden (79) von Unterstützungsinformationen zu einer maximal zulässigen Exposition in Reaktion auf die Detektion des Eintretens des maximal zulässigen Expositionsereignisses, wobei die Mittel zum Melden der Unterstützungsinformationen zu einer maximal zulässigen Exposition zu Folgendem ausgelegt sind:
Erzeugen eines geplanten Berichts in dem Fall, in dem die periodische Planungsaufhebungsbedingung ungültig ist, wobei der geplante Bericht gesendet wird, wenn eine erste Zeitperiode abläuft; und
Erzeugen eines nicht geplanten Berichts in dem Fall, in dem die periodische Planungsaufhebungsbedingung gültig ist, wobei der nicht geplante Bericht gesendet wird, ohne darauf zu warten, dass die erste Zeitperiode abläuft.

2. Einrichtung nach Anspruch 1, wobei in dem Fall, in dem eine Tastverhältnisreduzierung, die zum Adressieren des Expositionsereignisses erforderlich ist, über einem Schwellwert liegt, bestimmt wird, dass das detektierte maximal zulässige Expositionsereignis einen hohen Schweregrad aufweist.

3. Einrichtung nach Anspruch 1 oder Anspruch 2, die ferner Mittel zum Überwachen (109) eines laufenden maximal zulässigen Expositionsereignisses umfasst und wahlweise in dem Fall, in dem das maximal zulässige Expositionsereignis vor Ablauf einer zweiten Zeitperiode beendet wird, ferner Mittel zum Melden (111) umfasst, dass das maximal zulässige Expositionsereignis beendet wurde.

4. Einrichtung nach einem der vorhergehenden Ansprüche, die ferner zum Überwachen der ersten Zeitperiode einen ersten Timer umfasst,

5. Einrichtung nach einem der vorhergehenden Ansprüche, die ferner mindestens eines von Folgendem umfasst:
Mittel zum Anzeigen, dass die Einrichtung in der Lage ist, Unterstützungsinformationen für eine maximal zulässige Exposition bereitzustellen;
Mittel zum Auslösen eines Leistungsbackoff in Reaktion auf das maximal zulässige Expositionsereignis; und
Mittel zum Auslösen einer Tastverhältnisanpassung in Reaktion auf das maximal zulässige Expositionsereignis.

6. Einrichtung, die Folgendes umfasst:
Mittel zum Detektieren (123) eines Berichts zu einem maximal zulässigen Expositionsereignis;
Mittel zum Bestimmen (124), ob der Bericht zu einer maximal zulässigen Exposition ein geplanter Bericht oder ein nicht geplanter Bericht ist;
in dem Fall, in dem bestimmt wird, dass der Bericht zu einem detektierten maximal zulässigen Expositionsereignis ein nicht geplanter Bericht ist, Mittel zum Bestimmen (125), ob eine oder mehrere Zeitperioden eines Protokolls zu einem maximal zulässigen Expositionsereignis aktualisiert werden sollten, um die Instanzen von nicht geplanten Berichten zu reduzieren; und
Mittel zum Anpassen (127) von Uplinkressourcen, um Anforderungen eines Leistungsbackoff bei einer maximal zulässigen Exposition zu erfüllen.

7. Einrichtung nach Anspruch 6, die ferner Mittel zum Speichern einer Statistik zu einem maximal zulässigen Expositionsereignis nach Empfang eines Berichts zu einem maximal zulässigen Expositionsereignis umfasst.

8. Einrichtung nach Anspruch 6 oder Anspruch 7, die ferner Mittel zum Empfangen einer Anzeige, dass eine entfernte Benutzervorrichtung in der Lage ist, Unterstützungsinformationen bereitzustellen, die sich auf eine maximal zulässige Exposition beziehen, umfasst.

9. Einrichtung nach einem der Ansprüche 6 bis 8, die ferner Mittel zum Definieren einer ersten Timerstartzeit für eine Benutzervorrichtung umfasst, wobei der geplante Bericht von der Benutzervorrichtung in dem Fall des Ablaufens des ersten Timers an die Einrichtung gesendet wird, wobei die Mittel zum Definieren einer ersten Timerstartzeit wahlweise für jede einer Vielzahl von Benutzervorrichtungen erste Timerstartzeiten definieren.

10. Einrichtung nach einem der vorhergehenden Ansprüche, die ferner Mittel zum Neuauslegen von Benutzervorrichtungsprotokollen umfassen, um es zu ermöglichen, dass Unterstützungsinformationen zu einer maximal zulässigen Exposition zwischen einer Benutzervorrichtung und einem Netzwerkelement kommuniziert werden.

11. Einrichtung nach Anspruch 10, wobei die Unterstützungsinformationen zu einer maximal zulässigen Exposition als Teil einer modifizierten L3-basierten UE-Unterstützungssignalisierungsprozedur bereitgestellt werden.

12. Verfahren, das Folgendes umfasst:
Detektieren (72, 104) eines Eintretens eines maximal zulässigen Expositionsereignisses;
Bestimmen (74) eines Schweregrads des detektierten maximal zulässigen Expositionsereignisses und Einstellen einer periodischen Planungsaufhebungsbedingung derart, dass sie in dem Fall gültig ist, in dem bestimmt wird, dass das detektierte maximal zulässige Expositionsereignis einen hohen Schweregrad aufweist; und
Melden (79) von Unterstützungsinformationen zu einer maximal zulässigen Exposition in Reaktion auf die Detektion des Eintretens des maximal zulässigen Expositionsereignisses,
wobei das Melden von Unterstützungsinformationen zu einer maximal zulässigen Exposition Folgendes umfasst: Erzeugen eines geplanten Berichts in dem Fall, in dem die periodische Planungsaufhebungsbedingung ungültig ist, wobei der geplante Bericht gesendet wird, wenn eine erste Zeitperiode abläuft; und Erzeugen eines nicht geplanten Berichts in dem Fall, in dem die periodische Planungsaufhebungsbedingung gültig ist, wobei der nicht geplante Bericht gesendet wird, ohne darauf zu warten, dass die erste Zeitperiode abläuft.

13. Verfahren, das Folgendes umfasst:
Detektieren (123) eines Berichts zu einem maximal zulässigen Expositionsereignis;
Bestimmen (124), ob der Bericht zu einer maximal zulässigen Exposition ein geplanter Bericht oder ein nicht geplanter Bericht ist;
in dem Fall, in dem bestimmt wird, dass der Bericht zu einem detektierten maximal zulässigen Expositionsereignis ein nicht geplanter Bericht ist, Bestimmen (125), ob eine oder mehrere Zeitperioden eines Protokolls zu einem maximal zulässigen Expositionsereignis aktualisiert werden sollten, um die Instanzen von nicht geplanten Berichten zu reduzieren; und
Anpassen (127) von Uplinkressourcen, um Anforderungen eines Leistungsbackoff bei einer maximal zulässigen Exposition zu erfüllen.

14. Computerprogramm, das Anweisungen umfasst, die, wenn das Programm von einem Computer ausgeführt wird, den Computer veranlassen, mindestens Folgendes umzusetzen:
Detektieren eines Eintretens eines maximal zulässigen Expositionsereignisses und
Bestimmen eines Schweregrads des detektierten maximal zulässigen Expositionsereignisses;
Einstellen einer periodischen Planungsaufhebungsbedingung derart, dass sie in dem Fall gültig ist, in dem bestimmt wird, dass das detektierte maximal zulässige Expositionsereignis einen hohen Schweregrad aufweist; und
Melden von Unterstützungsinformationen zu einer maximal zulässigen Exposition in Reaktion auf die Detektion des Eintretens des maximal zulässigen Expositionsereignisses,
wobei das Melden von Unterstützungsinformationen zu einer maximal zulässigen Exposition Folgendes umfasst: Erzeugen eines geplanten Berichts in dem Fall, in dem die periodische Planungsaufhebungsbedingung ungültig ist, wobei der geplante Bericht gesendet wird, wenn eine erste Zeitperiode verstreicht; und Erzeugen eines nicht geplanten Berichts in dem Fall, in dem die periodische Planungsaufhebungsbedingung gültig ist, wobei der nicht geplante Bericht gesendet wird, ohne darauf zu warten, dass die erste Zeitperiode abläuft.

15. Computerprogramm, das Anweisungen umfasst, die, wenn das Programm von einem Computer ausgeführt wird, den Computer veranlassen, mindestens Folgendes umzusetzen:
Detektieren eines Berichts zu einem maximal zulässigen Expositionsereignis;
Bestimmen, ob der Bericht zu einer maximal zulässigen Exposition ein geplanter Bericht oder ein nicht geplanter Bericht ist;
in dem Fall, in dem bestimmt wird, dass der Bericht zu einem detektierten maximal zulässigen Expositionsereignis ein nicht geplanter Bericht ist, Bestimmen, ob eine oder mehrere Zeitperioden eines Protokolls zu einem maximal zulässigen Expositionsereignis aktualisiert werden sollten, um die Instanzen von nicht geplanten Berichten zu reduzieren; und
Anpassen von Uplinkressourcen, um Anforderungen eines Leistungsbackoff bei einer maximal zulässigen Exposition zu erfüllen.

## Revendications

1. Appareil comprenant :
des moyens pour détecter (72, 104) l'occurrence d'un cas d'exposition maximale admissible ;
des moyens pour déterminer (74) la gravité du cas d'exposition maximale admissible détecté ;
des moyens pour fixer une condition de priorité de planification périodique qui sera valide dans le cas où le cas d'exposition maximale admissible détecté est déterminé comme ayant une gravité élevée ; et
des moyens pour signaler (79) des informations d'assistance d'exposition maximale admissible en réponse à la détection de l'occurrence du cas d'exposition maximale admissible, dans lequel les moyens pour signaler les informations d'assistance d'exposition maximale admissible sont configurés pour :
générer un rapport planifié dans le cas où la condition de priorité de planification périodique n'est pas valide, dans lequel le rapport planifié est envoyé à l'expiration d'une première période de temps ; et
générer un rapport non planifié dans le cas où la condition de priorité de planification périodique est valide, dans lequel le rapport non planifié est envoyé sans attendre l'expiration de la première période de temps.

2. Appareil selon la revendication 1, dans lequel le cas d'exposition maximale admissible détecté est déterminé comme ayant une gravité élevée dans le cas où une réduction de rapport cyclique nécessaire pour traiter ledit cas d'exposition est au-dessus d'un seuil.

3. Appareil selon la revendication 1 ou la revendication 2, comprenant en outre des moyens pour surveiller (109) un cas d'exposition maximale admissible en cours, et facultativement, comprenant en outre des moyens pour signaler (111) que le cas d'exposition maximale admissible a pris fin dans le cas où le cas d'exposition maximale admissible prend fin avant l'expiration d'une deuxième période de temps.

4. Appareil selon l'une quelconque des revendications précédentes, comprenant en outre un premier temporisateur pour surveiller ladite première période de temps.

5. Appareil selon l'une quelconque des revendications précédentes, comprenant en outre au moins l'un des moyens suivants :
des moyens pour indiquer que l'appareil est en mesure de fournir des informations d'assistance d'exposition maximale admissible ;
des moyens pour déclencher un recul de puissance en réponse au cas d'exposition maximale admissible ; et
des moyens pour déclencher un réglage de rapport cyclique en réponse au cas d'exposition maximale admissible.

6. Appareil comprenant :
des moyens pour détecter (123) un rapport de cas d'exposition maximale admissible ;
des moyens pour déterminer (124) si le rapport d'exposition maximale admissible détecté est un rapport planifié ou un rapport non planifié ;
des moyens pour déterminer (125) si une ou plusieurs périodes de temps d'un protocole de cas d'exposition maximale admissible doivent être mises à jour dans le cas où le rapport de cas d'exposition maximale admissible détecté est déterminé comme étant un rapport non planifié, afin de réduire les instances des rapports non planifiés ; et
des moyens pour régler (127) des ressources de liaison montante pour répondre aux exigences de recul de puissance d'exposition maximale admissible.

7. Appareil selon la revendication 6, comprenant en outre des moyens pour stocker des statistiques de cas d'exposition maximale admissible à la réception d'un rapport de cas d'exposition maximale admissible.

8. Appareil selon la revendication 6 ou la revendication 7, comprenant en outre des moyens pour recevoir une indication selon laquelle un dispositif utilisateur à distance est en mesure de fournir des informations d'assistance relatives à l'exposition maximale admissible.

9. Appareil selon l'une quelconque des revendications 6 à 8, comprenant en outre des moyens pour définir une première heure de début de temporisateur pour un dispositif utilisateur, dans lequel ledit rapport planifié est envoyé par ledit dispositif utilisateur audit appareil en cas d'expiration dudit premier temporisateur, dans lequel les moyens pour définir une première heure de début de temporisateur définissent facultativement des premières heures de début de temporisateur pour chacun d'une pluralité de dispositifs utilisateurs.

10. Appareil selon l'une quelconque des revendications précédentes, comprenant en outre des moyens pour reconfigurer des protocoles de dispositif utilisateur afin de permettre la communication d'informations d'assistance d'exposition maximale admissible entre un dispositif utilisateur et un élément de réseau.

11. Appareil selon la revendication 10, dans lequel lesdites informations d'assistance d'exposition maximale admissible sont fournies dans le cadre d'une procédure de signalisation d'assistance à l'UE basée sur L3 modifiée.

12. Procédé comprenant les étapes suivantes :
détecter (72, 104) l'occurrence d'un cas d'exposition maximale admissible ;
déterminer (74) la gravité du cas d'exposition maximale admissible détecté et fixer une condition de priorité de planification périodique qui sera valide dans le cas où le cas d'exposition maximale admissible détecté est déterminé comme ayant une gravité élevée ; et
signaler (79) des informations d'assistance d'exposition maximale admissible en réponse à la détection de l'occurrence du cas d'exposition maximale admissible,
dans lequel le signalement des informations d'assistance d'exposition maximale admissible comprend : la génération d'un rapport planifié dans le cas où la condition de priorité de planification périodique n'est pas valide, dans lequel le rapport planifié est envoyé à l'expiration d'une première période de temps ; et la génération d'un rapport non planifié dans le cas où la condition de priorité de planification périodique est valide, dans lequel le rapport non planifié est envoyé sans attendre l'expiration de la première période de temps.

13. Procédé comprenant les étapes suivantes :
détecter (123) un rapport de cas d'exposition maximale admissible ;
déterminer (124) si le rapport d'exposition maximale admissible détecté est un rapport planifié ou un rapport non planifié ;
déterminer (125) si une ou plusieurs périodes de temps d'un protocole de cas d'exposition maximale admissible doivent être mises à jour dans le cas où le rapport de cas d'exposition maximale admissible détecté est déterminé comme étant un rapport non planifié, afin de réduire les instances des rapports non planifiés ; et
régler (127) des ressources de liaison montante pour répondre aux exigences de recul de puissance d'exposition maximale admissible.

14. Programme informatique comprenant des instructions qui, lorsque le programme est exécuté par un ordinateur, amènent l'ordinateur à effectuer au moins ce qui suit :
détecter l'occurrence d'un cas d'exposition maximale admissible ; et
déterminer la gravité du cas d'exposition maximale admissible détecté ;
fixer une condition de priorité de planification périodique qui sera valide dans le cas où le cas d'exposition maximale admissible détecté est déterminé comme ayant une gravité élevée ; et
signaler des informations d'assistance d'exposition maximale admissible en réponse à la détection de l'occurrence du cas d'exposition maximale admissible,
dans lequel le signalement des informations d'assistance d'exposition maximale admissible comprend : la génération d'un rapport planifié dans le cas où la condition de priorité de planification périodique n'est pas valide, dans lequel le rapport planifié est envoyé à l'écoulement d'une première période de temps ; et la génération d'un rapport non planifié dans le cas où la condition de priorité de planification périodique est valide, dans lequel le rapport non planifié est envoyé sans attendre l'expiration de la première période de temps.

15. Programme informatique comprenant des instructions qui, lorsque le programme est exécuté par un ordinateur, amènent l'ordinateur à effectuer au moins ce qui suit :
détecter un rapport de cas d'exposition maximale admissible ;
déterminer si le rapport d'exposition maximale admissible détecté est un rapport planifié ou un rapport non planifié ;
déterminer si une ou plusieurs périodes de temps d'un protocole de cas d'exposition maximale admissible doivent être mises à jour dans le cas où le rapport de cas d'exposition maximale admissible détecté est déterminé comme étant un rapport non planifié, afin de réduire les instances des rapports non planifiés ; et
régler des ressources de liaison montante pour répondre aux exigences de recul de puissance d'exposition maximale admissible.
